# EUROPÄISCHE PATENTSCHRIFT

(11) **EP 3 610 323 B1**
(45) Veröffentlichungstag und Bekanntmachung des Hinweises auf die Patenterteilung: **16.12.2020**
(21) Anmeldenummer: 18706534.7
(22) Anmeldetag: 28.02.2018
(51) Int. Cl.: G02F 1/1334, B32B 17/10

(54) **VERBUNDSCHEIBE MIT FUNKTIONSELEMENT MIT ELEKTRISCH STEUERBAREN OPTISCHEN EIGENSCHAFTEN**
COMPOUND GLAZING WITH A FUNCTIONAL ELEMENT WITH ELECTRICALLY DRIVEN OPTICAL PROPERTIES
VITRE COMPOSITE AYANT UN ÉLÉMENT FONCTIONNEL PRÉSENTANT DES PROPRIÉTÉS OPTIQUES À COMMANDE ÉLECTRIQUE

(30) Priorität: 12.04.2017 EP 17166235
(43) Veröffentlichungstag der Anmeldung: 19.02.2020
(73) Patentinhaber: SAINT-GOBAIN GLASS FRANCE, 92400 Courbevoie (FR)
(72) Erfinder: DRÖGE, Alicia, 52134 Herzogenrath (DE); KLEIN, Marcel, 52499 Baesweiler (DE)
(74) Vertreter: Obermair, Christian Egbert
(86) Internationale Anmeldenummer: PCT/EP2018/054897
(87) Internationale Veröffentlichungsnummer: WO 2018/188844

(56) Entgegenhaltungen:
- WO-A1-2007/122428
- WO-A1-2014/086555
- DE-U1- 20 220 494
- US-A- 6 074 732

## Beschreibung

Die Erfindung betrifft eine Verbundscheibe mit einem Funktionselement mit elektrisch steuerbaren optischen Eigenschaften und insbesondere eine Windschutzscheibe mit elektrisch steuerbarer Sonnenblende.

Im Fahrzeugbereich und im Baubereich werden oftmals Verbundscheiben mit elektrisch steuerbaren Funktionselementen zum Sonnenschutz oder zum Sichtschutz eingesetzt.

So sind beispielsweise Windschutzscheiben bekannt, in denen eine Sonnenblende in Form eines Funktionselements mit elektrisch steuerbaren optischen Eigenschaften integriert ist. Dabei ist insbesondere die Transmission oder das Streuverhalten von elektromagnetischer Strahlung im sichtbaren Bereich elektrisch steuerbar. Die Funktionselemente sind in der Regel folienartig und werden in eine Verbundscheibe einlaminiert oder an diese angeklebt. Bei Windschutzscheiben kann der Fahrer das Transmissionsverhalten der Scheibe selbst gegenüber Sonnenstrahlung steuern. So kann auf eine herkömmliche mechanische Sonnenblende verzichtet werden. Dadurch kann das Gewicht des Fahrzeugs reduziert werden und es wird Platz im Dachbereich gewonnen. Zudem ist das elektrische Steuern der Sonnenblende für den Fahrer komfortabler als das manuelle Herunterklappen der mechanischen Sonnenblende.

Windschutzscheiben mit derartigen elektrisch steuerbaren Sonnenblenden sind beispielsweise bekannt aus WO 2014/086555 A1, DE 102013001334 A1, DE 102005049081 B3, DE 102005007427 A1 und DE 102007027296 A1. Der Oberbegriff von Anspruch 1 basiert auf der WO2014086555.

Typische elektrisch steuerbare Funktionselemente enthalten elektrochrome Schichtstrukturen oder Single Particle Device (SPD)-Folien. Weitere mögliche Funktionselemente zur Realisierung eines elektrisch steuerbaren Sonnenschutzes sind sogenannte PDLC-Funktionselemente (*polymer dispersed liquid crystal*)*.* Deren aktive Schicht enthält Flüssigkristalle, welche in eine Polymermatrix eingelagert sind. Wird keine Spannung angelegt, so sind die Flüssigkristalle ungeordnet ausgerichtet, was zu einer starken Streuung des durch die aktive Schicht tretenden Lichts führt. Wird an die Flächenelektroden eine Spannung angelegt, so richten sich die Flüssigkristalle in einer gemeinsamen Richtung aus und die Transmission von Licht durch die aktive Schicht wird erhöht. Das PDLC-Funktionselement wirkt weniger durch Herabsetzung der Gesamttransmission, sondern durch Erhöhung der Streuung, um den Blendschutz zu gewährleisten.

Herkömmliche, einlaminierte Funktionselemente und insbesondere PDLC-Funktionselemente zeigen im Randbereich oftmals unerwünschte Alterungserscheinungen, wie Aufhellungen und Veränderungen in der Abschattung.

Der vorliegenden Erfindung liegt daher die Aufgabe zugrunde, eine verbesserte Verbundscheibe mit einem Funktionselement mit elektrisch steuerbaren optischen Eigenschaften bereitzustellen, die insbesondere hinsichtlich ihrer Alterungsbeständigkeit verbessert ist.

Die Aufgabe der vorliegenden Erfindung wird durch eine Verbundscheibe gemäß dem unabhängigen Anspruch 1 gelöst. Bevorzugte Ausführungen gehen aus den Unteransprüchen hervor.

Eine erfindungsgemäße Verbundscheibe umfasst mindestens:
- eine Stapelfolge aus einer Außenscheibe, einer ersten Zwischenschicht, einer zweiten Zwischenschicht und einer Innenscheibe, wobei die Zwischenschichten jeweils mindestens eine thermoplastische polymere Folie mit mindestens einem Weichmacher enthalten, und
- zwischen der ersten Zwischenschicht und der zweiten Zwischenschicht zumindest abschnittsweise ein Funktionselement mit elektrisch steuerbaren optischen Eigenschaften angeordnet ist,
wobei zwischen der ersten Zwischenschicht und dem Funktionselement sowie zwischen dem Funktionselement und der zweiten Zwischenschicht mindestens eine Sperrfolie angeordnet ist, die zumindest abschnittsweise einen Überstand u über das Funktionselement aufweist, und überstehende Abschnitte der Sperrfolie unmittelbar benachbart angeordnet sind, sich flächig berühren und aneinander gepresst, verklebt oder verschweißt sind.

Bevorzugt ist zwischen der ersten Zwischenschicht und dem Funktionselement sowie zwischen dem Funktionselement und der zweiten Zwischenschicht jeweils eine Sperrfolie angeordnet, wobei jede Sperrfolie zumindest abschnittsweise einen Überstand u über das Funktionselement aufweist und überstehende Abschnitte der Sperrfolie unmittelbar benachbart angeordnet sind und sich berühren. Die Begriffe "Überstand" bzw. "überstehen" bedeuten wie allgemein üblich verwendet: in lateraler (horizontaler) Richtung über etwas hinausragen. In diesem Fall ragt die Sperrfolie in der Ebene des Funktionselements über das Funktionselement hinaus. Lateral bedeutet hier, wie allgemein üblich verwendet: seitlich oder seitwärts.

Der erfindungsgemäße Überstand u unterscheidet sich daher von einem Überlappungsbereich, bei dem die Sperrfolie beispielsweise unmittelbar auf einem Abschnitt der Ober- oder der Unterseite des Funktionselements angeordnet ist.

Die Verbundscheibe kann beispielsweise die Windschutzscheibe oder die Dachscheibe eines Fahrzeugs oder eine andere Fahrzeugverglasung sein, beispielsweise eine Trennscheibe in einem Fahrzeug, bevorzugt in einem Schienenfahrzeug oder einem Bus. Alternativ kann die Verbundscheibe eine Architekturverglasung, beispielsweise in einer Außenfassade eines Gebäudes oder eine Trennscheibe im Innern eines Gebäudes sein.

Die Begriffe Außenscheibe und Innenscheibe beschreiben willkürlich zwei verschiedene Scheiben. Insbesondere kann die Außenscheibe als eine erste Scheibe und die Innenscheibe als eine zweite Scheibe bezeichnet werden.

Ist die Verbundscheibe dafür vorgesehen, in einer Fensteröffnung eines Fahrzeugs oder eines Gebäudes einen Innenraum gegenüber der äußeren Umgebung abzutrennen, so wird mit Innenscheibe im Sinne der Erfindung die dem Innenraum (Fahrzeuginnenraum) zugewandte Scheibe (zweite Scheibe) bezeichnet. Mit Außenscheibe wird die der äußeren Umgebung zugewandte Scheibe (erste Scheibe) bezeichnet. Die Erfindung ist aber darauf nicht eingeschränkt.

Die erfindungsgemäße Verbundscheibe enthält ein Funktionselement mit elektrisch steuerbaren optischen Eigenschaften, das zwischen einer ersten Zwischenschicht und einer zweiten Zwischenschicht zumindest abschnittsweise angeordnet ist. Die erste und zweite Zwischenschicht weisen üblicherweise dieselben Abmessungen wie die Außenscheibe und die Innenscheibe auf. Das Funktionselement ist bevorzugt folienartig.

In einer vorteilhaften Ausgestaltung einer erfindungsgemäßen Verbundscheibe ist zwischen der ersten Zwischenschicht und der zweiten Zwischenschicht jeweils mindestens eine Sperrfolie angeordnet, die an einer Seitenkante des Funktionselements, an zwei Seitenkanten des Funktionselements an drei Seitenkanten des Funktionselements oder allseitig (das heißt an vier oder mehr Seitenkanten des Funktionselements) einen Überstand u über das Funktionselement aufweist. Das bedeutet, dass eine Sperrfolie auf der Unterseite des Funktionselements angeordnet ist und eine weitere Sperrfolie an der Oberseite des Funktionselements angeordnet ist. Im Bereich des Überstand berührt ein überstehender Bereich der einen Sperrfolie unmittelbar einen überstehenden Bereich der zweiten Sperrfolie. Unterseite und Oberseite bedeuten bei einem folienartigen Funktionselement die zwei großen Flächen, die parallel zu Außenscheibe und Innenscheibe angeordnet sind, mit anderen Worten die Außenflächen und die Innenflächen des Funktionselements. Seitenkanten beschreiben die dazu orthogonal verlaufenen Flächen des Funktionselements, die bei folienartigen Funktionselementen sehr dünn ausgebildet sind. Die Sperrfolien können dabei die Oberseite und/oder die Unterseite des Funktionselements nur abschnittsweise oder vollständig bedecken.

In einer weiteren vorteilhaften Ausgestaltung einer erfindungsgemäßen Verbundscheibe ist zwischen der ersten Zwischenschicht und der zweiten Zwischenschicht mindestens eine einstückige Sperrfolie angeordnet, die zumindest abschnittsweise um eine Seitenkante des Funktionselements gefaltet ist. Seitenkante des Funktionselements ist bei folienartigen Funktionselementen die Seitenfläche orthogonal zur Unterseite und Oberseite. In einer besonders vorteilhaften Ausgestaltung dieser erfindungsgemäßen Verbundscheibe weist die Sperrfolie an einer anderen Seitenkante, an zwei anderen Seitenkanten oder an drei oder mehr anderen Seitenkanten einen Überstand u über das Funktionselement auf. Im Bereich des Überstand berührt ein überstehender Bereich der Sperrfolie unmittelbar einen überstehenden Bereich der umgefalteten und zurückgeführten Sperrfolie.

In einer weiteren vorteilhaften Ausgestaltung einer erfindungsgemäßen Verbundscheibe sind zwischen der ersten Zwischenschicht und der zweiten Zwischenschicht zwei, drei, vier oder mehr Sperrfolien angeordnet, die um zwei, drei, vier oder mehr Seitenkanten des Funktionselements gefaltet sind.

Die eine oder die mehreren Sperrfolien können dabei das Funktionselement abschnittsweise oder vollständig bedecken.

In einer weiteren vorteilhaften Ausgestaltung einer erfindungsgemäßen Verbundscheibe sind zwei, drei, vier oder mehr Sperrfolien zusammengeschweißt und bilden eine Tasche, in der das Funktionselement vollständig oder abschnittsweise angeordnet ist.

In einer vorteilhaften Ausgestaltung einer erfindungsgemäßen Verbundscheibe beträgt der Überstand u der Sperrfolie über das Funktionselement mindestens 0,5 mm, bevorzugt mindestens 2 mm, besonders bevorzugt mindestens 5 mm und insbesondere mindestens 10 mm. Der Überstand u wird in laterale Dimension also parallel zu den beiden größten Dimensionen des Funktionselements beziehungsweise der Verbundscheibe bestimmt.

In einer vorteilhaften Ausgestaltung einer erfindungsgemäßen Verbundscheibe beträgt der Überstand u der Sperrfolie über das Funktionselement weniger als 50 mm, bevorzugt weniger als 30 mm und besonders bevorzugt weniger als 20 mm.

In einer weiteren vorteilhaften Ausgestaltung einer erfindungsgemäßen Verbundscheibe sind die Sperrfolien beziehungsweise verschiedene Bereiche einer Sperrfolie im Bereich des Überstands miteinander verbunden, bevorzugt miteinander verpresst (beispielsweise durch Lamination in einer Verbundscheibe), verklebt oder verschweißt (beispielsweise durch lokales Erwärmen). Dadurch wird eine ausreichende und sichere Diffusionssperre für Weichmacher aus der Zwischenschicht erzeugt und eine Eintrübung des Randbereichs des Funktionselements vermindert oder verhindert.

In einer weiteren vorteilhaften Ausgestaltung einer erfindungsgemäßen Verbundscheibe sind die Sperrfolien beziehungsweise verschiedene Bereiche einer umgefalteten Sperrfolie vollflächig mit den angrenzenden Flächen des Funktionselements verbunden und bevorzugt verklebt, beispielsweise durch ein Klebemittel, insbesondere durch einen Klebstoff auf Acryl-Basis, bevorzugt auf Acrylat-Basis und ganz besonders bevorzugt ein Klebstoff, der mehr als 50% Methylmetacrylat enthält. Dies hat den besonderen Vorteil, dass ein Verrutschen der Sperrfolie während der Montage und während des Laminierens vermieden wird und die Sperrfolie fest und anliegend mit dem Funktionselement verbunden ist. Dadurch werden unter anderem Lufteinschlüsse zwischen Sperrfolie und Funktionselement vermieden und die optische Qualität derartiger Verbundscheiben ist besonders hoch.

In einer weiteren vorteilhaften Ausgestaltung einer erfindungsgemäßen Verbundscheibe sind die Sperrfolien (oder zwei Bereich einer umgefalteten Sperrfolie) nicht mit den Flächen des Funktionselements verbunden, sondern nur im Bereich des Überstands. Bevorzugt sind die Sperrfolien im Bereich des Überstands nur abschnittsweise miteinander verbunden, so dass beim Entlüften während des Laminierprozesses, eingeschlossene Luft zwischen Sperrfolie und Funktionselement entweichen kann und keine Lufteinschlüsse verbleiben, die die optische Qualität der Verbundscheibe mindern.

Die Erfindung beruht auf der Erkenntnis der Erfinder, dass die Diffusion von Weichmachern aus den Zwischenschichten in das Innere des Funktionselements bei Alterung zu einer Aufhellung oder Veränderung der Transmission führt, was die Durchsicht und Ästhetik der Verbundscheibe beeinträchtigt. Durch die Versiegelung des Funktionselements mit einer Sperrfolie, die die Diffusion von Weichmachern aus der Zwischenschicht in das Funktionselement und insbesondere in die Seitenkante des Funktionselements hemmt oder verhindert, werden solche Alterungserscheinungen deutlich vermindert oder vollständig verhindert.

Die Versiegelung im Bereich der Seitenkante des Funktionselements erfolgt dabei entweder über eine taschenförmig ausgebildete Sperrfolie, die um die Seitenkante herum gefaltete ist oder durch zwei Sperrfolien (beziehungsweise zwei Bereichen einer selben Sperrfolie), die unmittelbar benachbart zueinander angeordnet sind, sich flächig berühren und aneinander gepresst (beispielsweise durch Lamination im Innern der Verbundscheibe), verklebt (beispielsweise mit einem Klebemittel) oder verschweißt (beispielsweise durch lokales Erhitzen) sind.

In einer vorteilhaften Ausgestaltung einer erfindungsgemäßen Verbundscheibe enthält die Zwischenschicht ein Polymer, bevorzugt ein thermoplastisches Polymer.

In einer besonders vorteilhaften Ausgestaltung einer erfindungsgemäßen Verbundscheibe enthält die Zwischenschicht mindestens 3 Gew.-%, bevorzugt mindestens 5 Gew.-%, besonders bevorzugt mindestens 20 Gew.-%, noch mehr bevorzugt mindestens 30 Gew.-% und insbesondere mindestens 40 Gew.-% eines Weichmachers. Der Weichmacher enthält oder besteht bevorzugt aus Triethylenglykol-bis-(2-ethylhexanoat).

Weichmacher sind dabei Chemikalien, die Kunststoffe weicher, flexibler, geschmeidiger und/oder elastischer machen. Sie verschieben den thermoelastischen Bereich von Kunststoffen hin zu niedrigeren Temperaturen, so dass die Kunststoffe im Bereich der Einsatz-Temperatur die gewünschten elastischeren Eigenschaften aufweisen. Weitere bevorzugt Weichmacher sind Carbonsäureester, insbesondere schwerflüchtige Carbonsäureester, Fette, Öle, Weichharze und Campher. Weitere Weichmacher sind bevorzugt aliphatische Diester des Tri- bzw. Tetraethylenglykols. Besonders bevorzugt werden als Weichmacher 3G7, 3G8 oder 4G7 eingesetzt, wobei die erste Ziffer die Anzahl der Ethlenglycoleinheiten und die letzte Ziffer die Anzahl der Kohlenstoffatome im Carbonsäureteil der Verbindung bezeichnet. So steht 3G8 für Triethylenglykol-bis-(2-ethylhexanoat), d.h. für eine Verbindung der Formel C₄H₉CH (CH₂CH₃) CO (OCH₂CH₂)₃O₂CCH (CH₂CH₃) C₄H₉.

In einer weiteren besonders vorteilhaften Ausgestaltung einer erfindungsgemäßen Verbundscheibe enthält die Zwischenschicht mindestens 60 Gew.-%, bevorzugt mindestens 70 Gew.-%, besonders bevorzugt mindestens 90 Gew.-% und insbesondere mindestens 97 Gew.-% Polyvinylbutyral.

Die Dicke jeder Zwischenschicht beträgt bevorzugt von 0,2 mm bis 2 mm, besonders bevorzugt von 0,3 mm bis 1 mm, insbesondere von 0,3 mm bis 0,5 mm, beispielsweise 0,38 mm.

In einer vorteilhaften Ausgestaltung einer erfindungsgemäßen Verbundscheibe ist die Sperrfolie derart ausgebildet ist, dass sie die Diffusion von Weichmachern aus der Zwischenschicht durch die Sperrfolie verhindert.

In einer besonders vorteilhaften Ausgestaltung einer erfindungsgemäßen Verbundscheibe ist die Sperrfolie Weichmacher-arm, bevorzugt mit einem Weichmacheranteil von weniger als 3 Gew.-%, besonders bevorzugt von weniger als 1 Gew.-% und insbesondere von weniger als 0,5 Gew.-%. Ganz besonders bevorzugt ist die Sperrfolie Weichmacher-frei, das heißt ohne gezielten Zusatz eines Weichmachers. Die Sperrfolie enthält ein Polymer, bevorzugt Polyethylenterephthalat (PET) oder Polyvinylfluorid (PVF) oder besteht daraus. Die Sperrfolie kann auch Weichmacher-armes Polyvinylbutyral (PVB) mit einem Weichmacheranteil von weniger als 3 Gew.-% enthalten.

Das steuerbare Funktionselement umfasst typischerweise eine aktive Schicht zwischen zwei Flächenelektroden. Die aktive Schicht weist die steuerbaren optischen Eigenschaften auf, welche über die an die Flächenelektroden angelegte Spannung gesteuert werden können.

Die Flächenelektroden und die aktive Schicht sind typischerweise im Wesentlichen parallel zu den Oberflächen der Außenscheibe und der Innenscheibe angeordnet. Die Flächenelektroden sind mit einer externen Spannungsquelle auf an sich bekannte Art elektrisch verbunden. Die elektrische Kontaktierung ist durch geeignete Verbindungskabel, beispielsweise Folienleiter realisiert, welche optional über sogenannte Sammelleiter (bus bars), beispielsweise Streifen eines elektrisch leitfähigen Materials oder elektrisch leitfähige Aufdrucke, mit den Flächenelektroden verbunden sind.

Die Flächenelektroden sind bevorzugt als transparente, elektrisch leitfähige Schichten ausgestaltet. Die Flächenelektroden enthalten bevorzugt zumindest ein Metall, eine Metalllegierung oder ein transparentes leitfähiges Oxid (transparent conducting oxide, TCO). Die Flächenelektroden können beispielsweise Silber, Gold, Kupfer, Nickel, Chrom, Wolfram, Indium-Zinnoxid (ITO), Gallium-dotiertes oder Aluminium-dotiertes Zinkoxid und / oder Fluordotiertes oder Antimon-dotiertes Zinnoxid enthalten. Die Flächenelektroden weisen bevorzugt eine Dicke von 10 nm bis 2 µm auf, besonders bevorzugt von 20 nm bis 1 µm, ganz besonders bevorzugt von 30 nm bis 500 nm.

Das Funktionselement kann außer der aktiven Schicht und den Flächenelektroden weitere an sich bekannte Schichten aufweisen, beispielsweise Barriereschichten, Blockerschichten, Antireflexionsschichten, Schutzschichten und/oder Glättungsschichten.

Das Funktionselement liegt bevorzugt als Mehrschichtfolie mit zwei äußeren Trägerfolien vor. Bei einer solchen Mehrschichtfolie sind die Flächenelektroden und die aktive Schicht zwischen den beiden Trägerfolien angeordnet. Mit äußerer Trägerfolie ist hier gemeint, dass die Trägerfolien die beiden Oberflächen der Mehrschichtfolie ausbilden. Das Funktionselement kann dadurch als laminierte Folie bereitgestellt werden, die vorteilhaft verarbeitet werden kann. Das Funktionselement ist durch die Trägerfolien vorteilhaft vor Beschädigung, insbesondere Korrosion geschützt. Die Mehrschichtfolie enthält in der angegebenen Reihenfolge zumindest eine Trägerfolie, eine Flächenelektrode, eine aktive Schicht, eine weitere Flächenelektrode und eine weitere Trägerfolie. Die Trägerfolie trägt insbesondere die Flächenelektroden und gibt einer flüssigen oder weichen aktiven Schicht die nötige mechanische Stabilität.

Die Trägerfolien enthalten bevorzugt zumindest ein thermoplastisches Polymer, besonders bevorzugt Weichmacher-armes oder Weichmacher-freies Polyethylenterephthalat (PET).

Das ist besonders vorteilhaft im Hinblick auf die Stabilität der Mehrschichtfolie. Die Trägerfolien können aber auch andere Weichmacher-arme oder Weichmacher-freie Polymere enthalten oder daraus bestehen, beispielsweise Ethylenvinylacetat (EVA), Polypropylen, Polycarbonat, Polymethylmetacrylat, Polyacrylat, Polyvinylchlorid, Polyacetatharz, Gießharze, Acrylate, Fluorinierte Ethylen-Propylene, Polyvinylfluorid und/oder Ethylen-Tetrafluorethylen. Die Dicke jeder Trägerfolie beträgt bevorzugt von 0,1 mm bis 1 mm, besonders bevorzugt von 0,1 mm bis 0,2 mm.

Typischerweise weisen die Trägerfolien jeweils eine elektrisch leitfähige Beschichtung auf, die der aktiven Schicht zugewandt ist und als Flächenelektrode fungiert.

In einer weiteren vorteilhaften Ausgestaltung einer erfindungsgemäßen Verbundscheibe ist das Funktionselement ein PDLC-Funktionselement (*polymer dispersed liquid crystal*). Die aktive Schicht eines PDLC-Funktionselements enthält Flüssigkristalle, welche in eine Polymermatrix eingelagert sind. Wird an die Flächenelektroden keine Spannung angelegt, so sind die Flüssigkristalle ungeordnet ausgerichtet, was zu einer starken Streuung des durch die aktive Schicht tretenden Lichts führt. Wird an die Flächenelektroden eine Spannung angelegt, so richten sich die Flüssigkristalle in einer gemeinsamen Richtung aus und die Transmission von Licht durch die aktive Schicht wird erhöht.

Grundsätzlich ist es aber auch möglich, andere Arten von steuerbaren Funktionselementen einzusetzen, beispielweise elektrochrome Funktionselemente oder SPD-Funktionselemente (*suspended particle device*). Die erwähnten steuerbaren Funktionselemente und deren Funktionsweise sind dem Fachmann an sich bekannt, so dass an dieser Stelle auf eine ausführliche Beschreibung verzichtet werden kann.

Funktionselemente als Mehrschichtfolien sind kommerziell erhältlich. Das zu integrierende Funktionselement wird typischerweise aus einer Mehrschichtfolie mit größeren Ausmaßen in der gewünschten Form und Größe ausgeschnitten. Dies kann mechanisch erfolgen, beispielsweise mit einem Messer. In einer vorteilhaften Ausführung erfolgt das Ausschneiden mittels eines Lasers. Es hat sich gezeigt, dass die Seitenkante in diesem Fall stabiler ist als beim mechanischen Schneiden. bei mechanisch geschnittenen Seitenkanten kann die Gefahr bestehen, dass sich das Material gleichsam zurückzieht, was optisch auffällig ist und die Ästhetik der Scheibe nachteilig beeinflusst.

Das Funktionselement ist über einen Bereich der ersten Zwischenschicht mit der Außenscheibe und über einen Bereich der zweiten Zwischenschicht mit der Innenscheibe verbunden. Die Zwischenschichten sind bevorzugt flächig aufeinander angeordnet und miteinander laminiert, wobei das Funktionselement zwischen die beiden Schichten eingelegt ist. Die mit dem Funktionselement überlappenden Bereiche der Zwischenschichten bilden dann die Bereiche, welche das Funktionselement mit den Scheiben verbinden. In anderen Bereichen der Scheibe, wo die Zwischenschichten direkten Kontakt zueinander haben, können sie beim Laminieren derart verschmelzen, dass die beiden ursprünglichen Schichten unter Umständen nicht mehr erkennbar sind und stattdessen eine homogene Zwischenschicht vorliegt.

Eine Zwischenschicht kann beispielsweise durch eine einzige thermoplastische Folie ausgebildet werden. Eine Zwischenschicht kann auch als zweilagiger, dreilagiger oder mehrlagiger Folienstapel ausgebildet sein, wobei die einzelnen Folien gleiche oder unterschiedliche Eigenschaften aufweisen. Eine Zwischenschicht kann auch aus Abschnitten unterschiedlicher thermoplastischer Folien gebildet werden, deren Seitenkanten aneinandergrenzen.

In einer vorteilhaften Weiterbildung einer erfindungsgemäßen Verbundscheibe ist der Bereich der ersten oder der zweiten Zwischenschicht, über den das Funktionselement mit der Außenscheibe beziehungsweise der Innenscheibe verbunden ist, getönt oder gefärbt. Die Transmission dieses Bereichs im sichtbaren Spektralbereich ist also herabgesetzt gegenüber einer nicht getönten oder gefärbten Schicht. Der getönte/gefärbte Bereich der Zwischenschicht erniedrigt somit die Transmission der Windschutzscheibe im Bereich der Sonnenblende. Insbesondere wird der ästhetische Eindruck der Funktionselements verbessert, weil die Tönung zu einem neutraleren Erscheinungsbild führt, das auf den Betrachter angenehmer wirkt.

Unter elektrisch steuerbaren optischen Eigenschaften werden im Sinne der Erfindung solche Eigenschaften verstanden, die stufenlos steuerbar sind, aber gleichermaßen auch solche, die zwischen zwei oder mehr diskreten Zuständen geschaltet werden können.

Die elektrische Steuerung der Sonnenblende erfolgt beispielsweise mittels Schaltern, Dreh- oder Schiebereglern, die in den Armaturen des Fahrzeugs integriert sind. Es kann aber auch eine Schaltfläche zur Reglung der Sonnenblende in die Windschutzscheibe integriert sein, beispielsweise eine kapazitive Schaltfläche. Alternativ oder zusätzlich kann die Sonnenblende durch kontaktfreie Verfahren, beispielsweise durch das Erkennen von Gesten, oder in Abhängigkeit des durch eine Kamera und geeignete Auswerteelektronik festgestellten Zustands von Pupille oder Augenlid gesteuert werden. Alternativ oder zusätzlich kann die die Sonnenblende durch Sensoren, welchen einen Lichteinfall auf die Scheibe detektieren, gesteuert werden.

Der getönte oder gefärbte Bereich der Zwischenschicht weist bevorzugt eine Transmission im sichtbaren Spektralbereich von 10 % bis 50 % auf, besonders bevorzugt von 20% bis 40%. Damit werden besonders gute Ergebnisse erreicht hinsichtlich Blendschutz und optischem Erscheinungsbild.

Die Zwischenschicht kann durch eine einzelne thermoplastische Folie ausgebildet werden, in der der getönte oder gefärbte Bereich durch lokales Tönen oder Färben erzeugt wird. Solche Folien sind beispielsweise durch Koextrusion erhältlich. Alternativ können ein ungetönter Folienabschnitt und ein getönter oder gefärbter Folienabschnitt zur thermoplastischen Schicht zusammengesetzt werden.

Der getönte oder gefärbte Bereich kann homogen gefärbt oder getönt sein, das heißt eine ortsunabhängige Transmission aufweisen. Die Tönung oder Färbung kann aber auch inhomogenen sein, insbesondere kann ein Transmissionsverlauf realisiert sein. In einer Ausgestaltung nimmt der Transmissionsgrad im getönten oder gefärbten Bereich zumindest abschnittsweise mit steigendem Abstand zur Oberkante ab. So können scharfe Kanten des getönten oder gefärbten Bereichs vermieden werden, so dass der Übergang von der Sonnenblende in den transparenten Bereich der Windschutzscheibe graduell verläuft, was ästhetisch ansprechender aussieht.

In einer vorteilhaften Ausgestaltung ist der Bereich der ersten Zwischenschicht, also der Bereich zwischen dem Funktionselement und der Außenscheibe getönt. Dies bewirkt einen besonders ästhetischen Eindruck auf Draufsicht auf die Außenscheibe. Der Bereich der zweiten Zwischenschicht zwischen Funktionselement und Innenscheibe kann optional zusätzlich gefärbt oder getönt sein.

Die Verbundscheibe mit elektrisch steuerbarem Funktionselement kann vorteilhafterweise als Windschutzscheibe mit elektrisch steuerbarer Sonnenblende ausgebildet sein.

Eine solche Windschutzscheibe weist eine Oberkante und eine Unterkante auf sowie zwei zwischen Oberkante und Unterkante verlaufende Seitenkanten auf. Mit Oberkante wird diejenige Kante bezeichnet, welche dafür vorgesehen ist, in Einbaulage nach oben zu weisen. Mit Unterkante wird diejenige Kante bezeichnet, welche dafür vorgesehen ist, in Einbaulage nach unten zu weisen. Die Oberkante wird häufig auch als Dachkante und die Unterkante als Motorkante bezeichnet.

Windschutzscheiben weisen ein zentrales Sichtfeld auf, an dessen optische Qualität hohe Anforderungen gestellt werden. Das zentrale Sichtfeld muss eine hohe Lichttransmission aufweisen (typischerweise größer als 70%). Das besagte zentrale Sichtfeld ist insbesondere dasjenige Sichtfeld, das vom Fachmann als Sichtfeld B, Sichtbereich B oder Zone B bezeichnet wird. Das Sichtfeld B und seine technischen Anforderungen sind in der Steuerung Nr. 43 der Wirtschaftskommission der Vereinten Nationen für Europa (UN/ECE) (ECE-R43, "Einheitliche Bedingungen für die Genehmigung der Sicherheitsverglasungswerkstoffe und ihres Einbaus in Fahrzeuge") festgelegt. Dort ist das Sichtfeld B in Anhang 18 definiert.

Das Funktionselement ist dann vorteilhafterweise oberhalb des zentralen Sichtfelds (Sichtfeld B) angeordnet. Das bedeutet, dass das Funktionselement im Bereich zwischen dem zentralen Sichtfeld und der Oberkante der Windschutzscheibe angeordnet ist. Das Funktionselement muss nicht den gesamten Bereich abdecken, ist aber vollständig innerhalb dieses Bereichs positioniert und ragt nicht in das zentrale Sichtfeld hinein. Anders ausgedrückt weist das Funktionselement einen geringeren Abstand zur Oberkante der Windschutzscheibe auf als der zentrale Sichtbereich. Somit wird die Transmission des zentralen Sichtfelds nicht durch das Funktionselement beeinträchtigt, welches an einer ähnlichen Stelle positioniert ist wie eine klassische mechanische Sonnenblende im heruntergeklappten Zustand.

Die Windschutzscheibe ist bevorzugt für ein Kraftfahrzeug vorgesehen, besonders bevorzugt für einen Personenkraftwagen.

In einer bevorzugten Ausgestaltung ist das Funktionselement, genauer die Seitenkanten des Funktionselements umlaufend von einer dritten Zwischenschicht umgeben. Die dritte Zwischenschicht ist rahmenartig ausgebildet mit einer Aussparung, in welche das Funktionselement eingelegt wird. Die dritte Zwischenschicht kann ebenfalls durch eine thermoplastische Folie gebildet werden, in welche die Aussparung durch Ausschneiden eingebracht worden ist. Alternativ kann die dritte Zwischenschicht auch aus mehreren Folienabschnitten um das Funktionselement zusammengesetzt werden. Die Zwischenschicht ist bevorzugt aus insgesamt mindestens drei flächig aufeinander angeordneten thermoplastischen Schichten gebildet, wobei die mittlere Schicht eine Aussparung ausweist, in der das Funktionselement angeordnet ist. Bei der Herstellung wird die dritte Zwischenschicht zwischen der ersten und der zweiten Zwischenschicht angeordnet, wobei die Seitenkanten aller Zwischenschichten bevorzugt in Deckung angeordnet sind. Die dritte Zwischenschicht weist bevorzugt etwa die gleiche Dicke auf wie das Funktionselement. Dadurch wird der lokale Dickenunterschied der Windschutzscheibe, der durch das örtlich begrenzte Funktionselement eingebracht wird, kompensiert, so dass Glasbruch beim Laminieren vermieden werden kann.

Die in Durchsicht durch die Windschutzscheibe sichtbaren Seitenkanten des Funktionselements sind bevorzugt bündig mit der dritten Zwischenschicht angeordnet, so dass zwischen der Seitenkante des Funktionselements und der zugeordneten Seitenkante der Zwischenschicht keine Lücke existiert. Das gilt insbesondere für die Unterkante des Funktionselements, die typischerweise sichtbar ist. So ist die Grenze zwischen dritter Zwischenschicht und Funktionselement optisch unauffälliger.

In einer bevorzugten Ausgestaltung sind die Unterkanten des Funktionselements und des getönten Bereichs der Zwischenschicht(en) an die Form der Oberkante der Windschutzscheibe angepasst, was ein optisch ansprechenderes Erscheinungsbild bewirkt. Da die Oberkante einer Windschutzscheibe typischerweise gebogen ist, insbesondere konkav gebogen, ist auch die Unterkante des Funktionselements und des getönten Bereichs bevorzugt gebogen ausgestalten. Besonders bevorzugt sind die Unterkanten des Funktionselements im Wesentlichen parallel zur Oberkante der Windschutzscheibe ausgebildet. Es ist aber auch möglich, die Sonnenblende aus zwei jeweils geraden Hälften aufzubauen, die in einem Winkel zueinander angeordnet sind und der Form der Oberkante v-förmig angenähert sind.

In einer Ausgestaltung der Erfindung ist das Funktionselement durch Isolierungslinien in Segmente aufgeteilt. Die Isolierungslinien sind insbesondere in die Flächenelektroden eingebracht sein, so dass die Segmente der Flächenelektrode elektrisch voneinander isoliert sind. Die einzelnen Segmente sind unabhängig voneinander mit der Spannungsquelle verbunden, so dass sie separat angesteuert werden können. So können verschiedene Bereich der Sonnenblende unabhängig geschaltet werden. Besonders bevorzugt sind die Isolierungslinien und die Segmente in Einbaulage horizontal angeordnet. Damit kann die Höhe der Sonnenblende vom Benutzer gesteuert werden. Der Begriff "horizontal" ist hier breit auszulegen und bezeichnet eine Ausbreitungsrichtung, die bei einer Windschutzscheibe zwischen den Seitenkanten der Windschutzscheibe verläuft. Die Isolierungslinien müssen nicht notwendigerweise gerade sein, sondern können auch leicht gebogen sein, bevorzugt angepasst an eine eventuelle Biegung der Oberkante der Windschutzscheibe, insbesondere im Wesentlichen parallel zur Oberkante der Windschutzscheibe. Vertikale Isolierungslinien sind natürlich auch denkbar.

Die Isolierungslinien weisen beispielsweise eine Breite von 5 µm bis 500 µm, insbesondere 20 µm bis 200 µm auf. Die Breite der Segmente, also der Abstand benachbarten Isolierungslinien kann vom Fachmann gemäß den Anforderungen im Einzelfall geeignet gewählt werden.

Die Isolierungslinien können durch Laserablation, mechanisches Schneiden oder Ätzen während der Herstellung des Funktionselements eingebracht werden. Bereits laminierte Mehrschichtfolien können auch nachträglich noch mittels Laserablation segmentiert werden.

Die Oberkante und die Seitenkanten oder alle Seitenkanten des Funktionselements werden in Durchsicht durch die Verbundscheibe bevorzugt von einem opaken Abdeckdruck oder durch einen äußeren Rahmen verdeckt. Windschutzscheiben weisen typischerweise einen umlaufenden peripheren Abdeckdruck aus einer opaken Emaille auf, der insbesondere dazu dient, den zum Einbau der Windschutzscheibe verwendete Kleber vor UV-Strahlung zu schützen und optisch zu verdecken. Dieser periphere Abdeckdruck wird bevorzugt dazu verwendet, auch die Oberkante und die Seitenkante des Funktionselements zu verdecken, sowie die erforderlichen elektrischen Anschlüsse. Die Sonnenblende ist dann vorteilhaft ins Erscheinungsbild der Windschutzscheibe integriert und lediglich die Unterkante ist potentiell vom Betrachter zu erkennen. Bevorzugt weist sowohl die Außenscheibe als auch die Innenscheibe einen Abdeckdruck auf, so dass die Durchsicht von beiden Seiten gehindert wird.

Das Funktionselement kann auch Aussparungen oder Löcher aufweisen, etwa im Bereich sogenannter Sensorfenster oder Kamerafenster. Diese Bereiche sind dafür vorgesehen, mit Sensoren oder Kameras ausgestattet zu werden, deren Funktion durch ein steuerbares Funktionselement im Strahlengang beeinträchtigt werden würde, beispielsweise Regensensoren. Es ist auch möglich, die Sonnenblende mit mindestens zwei voneinander getrennten Funktionselementen zu realisieren, wobei zwischen den Funktionselementen ein Abstand besteht, der einen Raum für Sensor- oder Kamerafenster bereitstellt.

Das Funktionselement (oder die Gesamtheit der Funktionselemente im vorstehend beschriebenen Fall von mehreren Funktionselementen) ist bevorzugt über die gesamte Breite der Verbundscheibe beziehungsweise der Windschutzscheibe angeordnet, abzüglich eines beidseitigen Randbereichs mit einer Breite von beispielsweise 2 mm bis 20 mm. Auch zur Oberkante weist das Funktionselement bevorzugt einen Abstand von beispielsweise 2 mm bis 20 mm auf. Das Funktionselement ist so innerhalb der Zwischenschicht eingekapselt und vor Kontakt mit der umgebenden Atmosphäre und Korrosion geschützt.

Die Außenscheibe und die Innenscheibe sind bevorzugt aus Glas gefertigt, besonders bevorzugt aus Kalk-Natron-Glas, wie es für Fensterscheiben üblich ist. Die Scheiben können aber auch aus anderen Glassorten gefertigt sein, beispielsweise Quarzglas, Borosilikatglas oder Alumino-Sililat-Glas, oder aus starren klaren Kunststoffen, beispielsweise Polycarbonat oder Polymethylmethacrylat. Die Scheiben können klar sind, oder auch getönt oder gefärbt. Windschutzscheiben müssen dabei im zentralen Sichtbereich eine ausreichende Lichttransmission aufweisen, bevorzugt mindestens 70 % im Haupt-Durchsichtbereich A gemäß ECE-R43.

Die Außenscheibe, die Innenscheibe und/oder die Zwischenschicht können weitere geeignete, an sich bekannte Beschichtungen aufweisen, beispielsweise Antireflexbeschichtungen, Antihaftbeschichtungen, Antikratzbeschichtungen, photokatalytische Beschichtungen oder Sonnenschutzbeschichtungen oder Low-E-Beschichtungen).

Die Dicke der Außenscheibe und der Innenscheibe kann breit variieren und so den Erfordernissen im Einzelfall angepasst werden. Die Außenscheibe und die Innenscheibe weisen bevorzugt Dicken von 0,5 mm bis 5 mm auf, besonders bevorzugt von 1 mm bis 3 mm.

Die Erfindung umfasst außerdem ein Verfahren zur Herstellung einer erfindungsgemäßen Verbundscheibe, wobei zumindest
a) eine Außenscheibe, eine erste Zwischenschicht, ein Funktionselement mit elektrisch steuerbaren optischen Eigenschaften, eine zweite Zwischenschicht und eine Innenscheibe in dieser Reihenfolge übereinander angeordnet werden, wobei zwischen Funktionselement und Zwischenschicht eine Sperrfolie angeordnet wird,
b) die Außenscheibe und die Innenscheibe durch Lamination verbunden werden, wobei aus der ersten Zwischenschicht und der zweiten Zwischenschicht eine Zwischenschicht mit eingelagertem Funktionselement gebildet wird.

Die elektrische Kontaktierung der Flächenelektroden des Funktionselements erfolgt bevorzugt vor dem Laminieren der Verbundscheibe.

Eventuell vorhandene Drucke, beispielsweise opake Abdeckdrucke oder aufgedruckte Sammelleiter zur elektrischen Kontaktierung des Funktionselements werden bevorzugt im Siebdruckverfahren aufgebracht.

Das Laminieren erfolgt bevorzugt unter Einwirkung von Hitze, Vakuum und/oder Druck. Es können an sich bekannte Verfahren zur Lamination verwendet werden, beispielsweise Autoklavverfahren, Vakuumsackverfahren, Vakuumringverfahren, Kalanderverfahren, Vakuumlaminatoren oder Kombinationen davon.

In einer vorteilhaften Ausführungsform des erfindungsgemäßen Verfahrens wird vor dem Verfahrensschritt a) eine erste Sperrfolie und die erste Zwischenschicht und/oder eine zweite Sperrfolie und die zweite Zwischenschicht miteinander verklebt, beispielsweise mit einem Acryl- oder Acrylat-Kleber. Derartige fixierte Sperrfolien lassen sich leichter und präziser verarbeiten, insbesondere bei Automation.

Die Erfindung umfasst weiterhin die Verwendung einer erfindungsgemäßen Verbundscheibe mit elektrisch steuerbarem Funktionselements als Innenverglasung oder Außenverglasung in einem Fahrzeug oder einem Gebäude, wobei das elektrisch steuerbare Funktionselement als Sonnenschutz oder als Sichtschutz verwendet wird.

Die Erfindung umfasst weiterhin die Verwendung einer erfindungsgemäßen Verbundscheibe als Windschutzscheibe oder Dachscheibe eines Fahrzeugs, wobei das elektrisch steuerbare Funktionselement als Sonnenblende verwendet wird.

Ein großer Vorteil der Erfindung besteht bei Verbundscheiben als Windschutzscheibe darin, dass auf eine klassische am Fahrzeugdach montierte, mechanisch klappbare Sonnenblende verzichtet werden kann. Die Erfindung umfasst daher auch ein Fahrzeug, bevorzugt Kraftfahrzeug, insbesondere Personenkraftwagen, welches keine solche klassische Sonnenblende aufweist.

Die Erfindung umfasst außerdem die Verwendung eines getönten oder gefärbten Bereichs einer Zwischenschicht zur Verbindung eines Funktionselements mit elektrisch steuerbaren optischen Eigenschaften mit einer Außenscheibe oder einer Innenscheibe einer Windschutzscheibe, wobei durch den getönten oder gefärbten Bereich der Zwischenschicht und das Funktionselement eine elektrisch steuerbare Sonnenblende realisiert wird.

Die Erfindung wird anhand einer Zeichnung und Ausführungsbeispielen näher erläutert. Die Zeichnung ist eine schematische Darstellung und nicht maßstabsgetreu. Die Zeichnung schränkt die Erfindung in keiner Weise ein. Es zeigen:
- Figur 1A: eine Draufsicht auf eine erste Ausgestaltung einer erfindungsgemäßen Verbundscheibe,
- Figur 1B: einen Querschnitt durch die Verbundscheibe aus Figur 1A entlang der Schnittlinie X-X',
- Figur 1C: eine vergrößerte Darstellung des Bereichs Z aus Figur 1B,
- Figur 2: einen Querschnitt durch eine Weiterbildung einer erfindungsgemäßen Verbundscheibe,
- Figur 3A: eine Draufsicht auf eine weitere Ausgestaltung einer erfindungsgemäßen Verbundscheibe,
- Figur 3B: einen Querschnitt durch die Verbundscheibe aus Figur 3A entlang der Schnittlinie X-X',
- Figur 3C: eine vergrößerte Darstellung des Bereichs Z aus Figur 3B,
- Figur 3D: eine vergrößerte Darstellung des Bereichs Z einer alternativen erfindungsgemäßen Ausgestaltung nach Figur 3B,
- Figur 4: einen Querschnitt durch eine Weiterbildung einer erfindungsgemäßen Verbundscheibe,
- Figur 5A: eine Draufsicht auf eine weitere Ausgestaltung einer erfindungsgemäßen Verbundscheibe als Windschutzscheibe mit Sonnenblende,
- Figur 5B: einen Querschnitt durch die Verbundscheibe aus Figur 5A entlang der Schnittlinie X-X',
- Figur 5C: eine vergrößerte Darstellung des Bereichs Z aus Figur 5B,
- Figur 6: eine Draufsicht auf eine weitere Ausgestaltung einer erfindungsgemäßen Verbundscheibe als Windschutzscheibe mit Sonnenblende,
- Figur 7: ein Ausführungsbeispiel des erfindungsgemäßen Verfahrens anhand eines Flussdiagramms, und
- Figur 8: als Vergleichsbeispiel einen Querschnitt durch eine Verbundscheibe nach dem Stand der Technik.

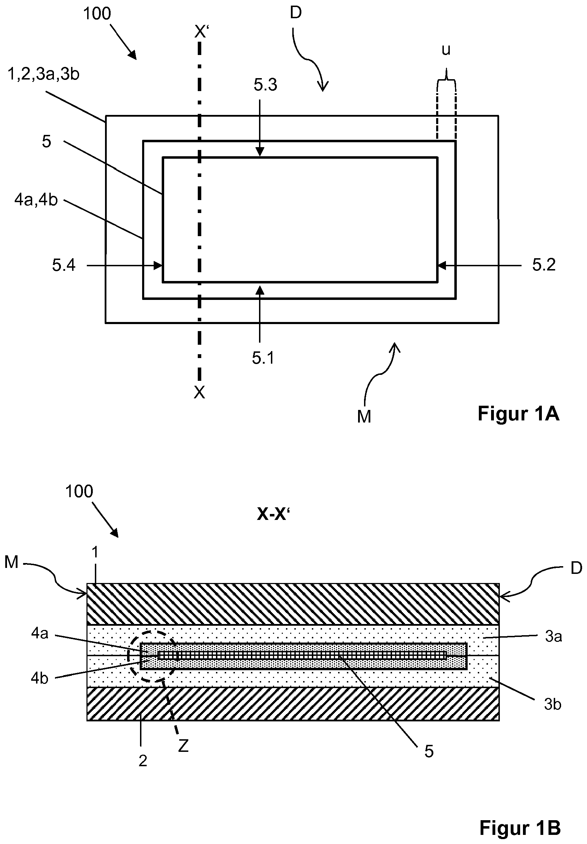

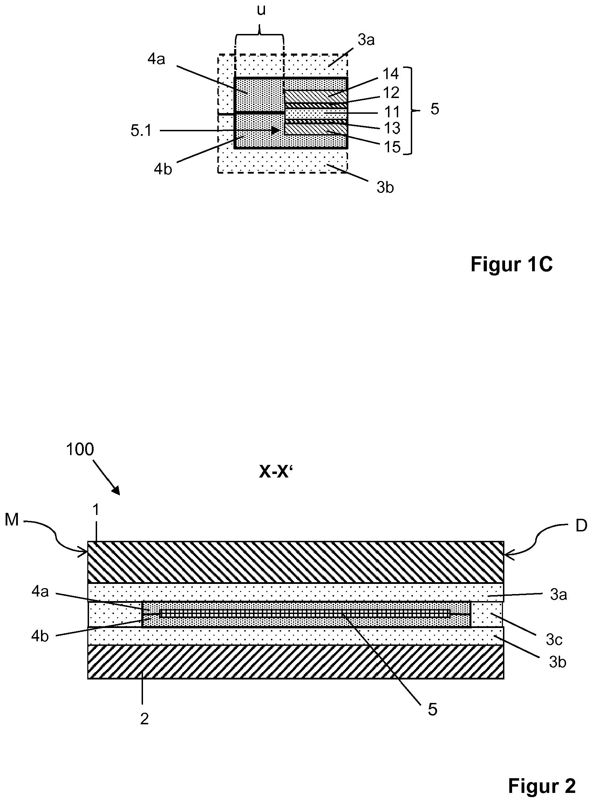

Figur 1A, Figur 1B und Figur 1C zeigen je ein Detail einer erfindungsgemäßen Verbundscheibe 100. Die Verbundscheibe 100 umfasst eine Außenscheibe 1 und eine Innenscheibe 2, die über eine erste Zwischenschicht 3a und eine zweite Zwischenschicht 3b miteinander verbunden sind. Die Außenscheibe 1 weist eine Dicke von 2,1 mm auf und besteht beispielsweise aus einem klaren Kalk-Natron-Glas. Die Innenscheibe 2 weist eine Dicke von 1,6 mm auf und besteht beispielsweise ebenfalls aus einem klaren Kalk-Natron-Glas. Die Verbundscheibe 100 weist eine mit D bezeichnete erste Kante auf, die im Folgenden Oberkante genannt wird. Die Verbundscheibe 100 weist eine mit M bezeichnete zweite Kante auf, die der Oberkante D gegenüber angeordnet ist und im Folgenden Unterkante genannt wird. Die Verbundscheibe 100 kann beispielsweise als Architekturverglasung in den Rahmen eines Fensters mit weiteren Scheiben zu einer Isolierverglasung angeordnet sein.

Zwischen der ersten Zwischenschicht 3a und der zweiten Zwischenschicht 3b ist ein Funktionselement 5 angeordnet, welches durch eine elektrische Spannung in seinen optischen Eigenschaften steuerbar ist. Die elektrischen Zuleitungen sind der Einfachheit halber nicht dargestellt.

Das steuerbare Funktionselement 5 ist beispielsweise eine PDLC-Mehrschichtfolie, bestehend aus einer aktiven Schicht 11 zwischen zwei Flächenelektroden 12, 13 und zwei Trägerfolien 14, 15. Die aktive Schicht 11 enthält eine Polymermatrix mit darin dispergierten Flüssigkristallen, die sich in Abhängigkeit der an die Flächenelektroden angelegten elektrischen Spannung ausrichten, wodurch die optischen Eigenschaften gesteuert werden können. Die Trägerfolien 14, 15 bestehen aus PET und weisen eine Dicke von beispielsweise 0,125 mm auf. Die Trägerfolien 14, 15 sind mit einer zur aktiven Schicht 11 weisenden Beschichtung aus ITO mit einer Dicke von etwa 100 nm versehen, welche die Flächenelektroden 12, 13 ausbilden. Die Flächenelektroden 12, 13 sind über nicht dargestellte Sammelleiter (beispielweise ausgebildet durch einen silberhaltigen Siebdruck) und nicht dargestellte Verbindungskabel mit der Bordelektrik verbindbar.

Die Zwischenschichten 3a, 3b umfassen jeweils eine thermoplastische Folie mit einer Dicke von 0,38 mm. Die Zwischenschichten 3a, 3b bestehen beispielsweise aus 78 Gew.-% Polyvinylbutyral (PVB) und 20 Gew.-% Triethylene glycol bis(2-ethylhexanoate) als Weichmacher.

Zwischen der ersten Zwischenschicht 3a und dem Funktionselement 5 ist eine Sperrfolie 4a angeordnet. Des Weiteren ist zwischen dem Funktionselement 5 und der zweiten Zwischenschicht 3b eine weitere Sperrfolie 4b angeordnet. Die Sperrfolien 4a, 4b weisen hier beispielsweise einen allseitigen Überstand u von beispielsweise 5 mm über das Funktionselement 5 auf. Allseitig bedeutet hier, das ein Überstand u über jede Seitenkante 5.1, 5.2, 5.3, 5.4 des Funktionselements 5 vorliegt. Im Bereich des Überstand berühren Abschnitte der Sperrfolie 4a unmittelbar gegenüberliegende Abschnitte der Sperrfolie 4b. Durch den allseitigen Überlapp wird das Funktionselement 5 vollständig von Sperrfolie 4a, 4b umschlossen und versiegelt.

Die Sperrfolie 4a, 4b besteht hier beispielsweise im Wesentlichen aus PET, das heißt zu mindestens 97 Gew.-%. Die Sperrfolie 4a, 4b enthält weniger als 0,5 Gew.-% Weichmacher und ist dazu geeignet, die Diffusion von Weichmacher aus den Zwischenschichten 3a, 3b über die Seitenkanten 5.1, 5.2, 5.3, 5.4 in die Funktionsschicht 5 hinein zu reduzieren oder zu unterbinden.

Derartige Verbundscheiben 100 zeigen in Alterungstests eine deutlich reduzierte Aufhellung im Randbereich des Funktionselements 5, da eine Diffusion des Weichmachers aus den Zwischenschichten 3a, 3b in das Funktionselement 5 und eine dadurch einhergehende Degradation des Funktionselements 5 vermieden wird.

In einer vorteilhaften Weiterbildung der erfindungsgemäßen Verbundscheibe 100 wird zwischen der Sperrfolie 4a und dem Funktionselement 5, zwischen der Sperrfolie 4b und dem Funktionselement 5 und den sich berührenden Abschnitten der Sperrfolien 4a, 4b ein Klebemittel, beispielsweise ein Kleber auf Acrylat-Basis angeordnet, der die Sperrfolien 4a, 4b fest mit den angrenzenden Trägerfolien 14, 15 oder der gegenüberliegenden Sperrfolie 4a, 4b verklebt. Die Klebeverbindung verhindert das Verrutschen der Sperrfolie 4a, 4b bei der Montage. Gleichzeitig werden Einschlüsse von Luftblasen und dadurch entstehende optischen Störungen oder Beeinträchtigungen vermieden, da die Sperrfolie 4a, 4b gleichmäßig auf dem Funktionselement 5 aufliegt.

Figur 2 zeigt eine Weiterbildung der erfindungsgemäßen Verbundscheibe 100 aus den Figuren 1A-C. Die Verbundscheibe 100 aus Figur 2 entspricht im Wesentlichen, der Verbundscheibe 100 aus den Figuren 1A-C, so dass im Folgenden nur auf die Unterschiede eingegangen wird.

In dieser Ausgestaltung ist abschnittsweise zwischen erster Zwischenschicht 3a und zweiter Zwischenschicht 3b eine weitere, dritte Zwischenschicht 3c angeordnet. Die dritte Zwischenschicht 3c besteht beispielsweise aus dem gleichen Material wie die erste und die zweite Zwischenschicht 3a, 3b. Die dritte Zwischenschicht weist einen Ausschnitt auf, in welchen das Funktionselement 5 mit den Sperrfolien 4a, 4b passgenau, das heißt an allen Seiten bündig, eingelegt ist. Die dritte Zwischenschicht 3c bildet damit eine Art Passepartout für das Funktionselement 5. Durch die dritte Zwischenschicht 3c können die Dickenunterschiede, die durch die Materialdicken von Funktionselement 5 und Sperrfolie 4a, 4b bedingt sind, ausgeglichen werden.

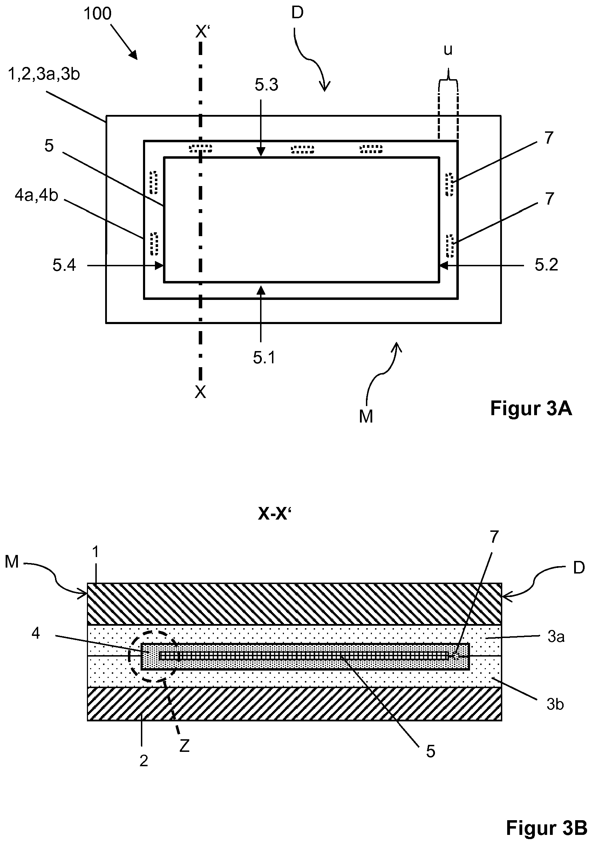

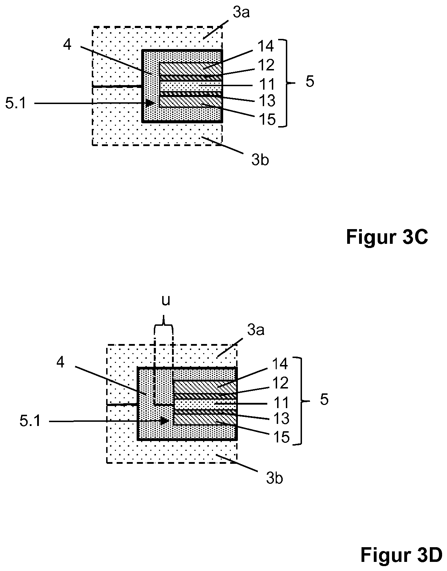

Figur 3A, Figur 3B und Figur 3C zeigen je ein Detail einer alternativen erfindungsgemäßen Verbundscheibe 100. Die Verbundscheibe 100 aus den Figuren 3A-C entspricht im Wesentlichen, der Verbundscheibe 100 aus den Figuren 1A-C, so dass im Folgenden nur auf die Unterschiede eingegangen wird.

Im Unterschied zu den Figuren 1A-C ist in der Verbundscheibe 100 aus den Figuren 3A-C die Sperrfolie 4 einstückig ausgebildet und um eine Seitenkante 5.1 des Funktionselements 5 (hier der zur Kante M der Verbundscheibe 100 unmittelbar benachbarten Seitenkante 5.1 des Funktionselements 5) gefaltet. Gefaltet bedeutet hier, dass die Sperrfolie 4 um 180° gedreht und parallel zu sich selbst angeordnet wird. In dem so gebildeten Zwischenraum ist das Funktionselement 5 angeordnet. An allen anderen Seitenkanten 5.2, 5.3, 5.4 des Funktionselements 5 weist die Sperrfolie 4 einen Überstand u von beispielsweise 10 mm auf.

In einer vorteilhaften Weiterbildung der erfindungsgemäßen Verbundscheibe 100 wird zwischen der Sperrfolie 4 und dem Funktionselement 5 und den sich berührenden Abschnitten der Sperrfolien 4 ein Klebemittel, beispielsweise ein Kleber auf Acrylat-Basis angeordnet, der die Sperrfolien 4 fest mit den angrenzenden Trägerfolien 14, 15 oder der gegenüberliegenden Sperrfolie 4 verklebt. Die Klebeverbindung verhindert das Verrutschen der Sperrfolie 4 bei der Montage. Gleichzeitig werden Einschlüsse von Luftblasen und dadurch entstehende optischen Störungen oder Beeinträchtigungen vermieden, da die Sperrfolie 4 gleichmäßig auf dem Funktionselement 5 aufliegt.

Alternativ zum Klebemittel können die zwei Lagen oder Abschnitte der Sperrfolie 4 nur im Bereich des Überstands miteinander verklebt oder miteinander verschmolzen werden, beispielsweise durch lokales Erwärmen mit einem heißen Gegenstand, wie einem Lötkolben oder ähnlichem. Dabei ist es vorteilhaft, wenn diese Art der Verklebung oder Verschmelzung nur abschnittsweise erfolgt, beispielsweise an den Verbindungstellen 7, so dass eingeschlossene Luft zwischen Sperrfolie 4 und Funktionselement 5 während des Laminierens entweichen kann und keine Luftblasen die optischen Eigenschaften der Verbundscheibe 100 im Bereich des Funktionselements 5 beeinträchtigen.

Figur 3D zeigt eine vergrößerte Darstellung des Bereichs Z einer alternativen erfindungsgemäßen Ausgestaltung nach Figur 3B. In diesem Ausgestaltungsbeispiel ist, ähnlich wie in Figur 3C die Sperrfolie 4 einstückig ausgebildet und um eine Seitenkante 5.1 des Funktionselements 5 (hier der zur Kante M der Verbundscheibe 100 unmittelbar benachbarten Seitenkante 5.1 des Funktionselements 5) gefaltet. Die Faltung ist aber nicht enganliegend und unmittelbar an der Seitenkante 5.1 entlang geführt sondern bildet einen überstehenden Bereich, in dem sich die obere Lage der Sperrfolie 4 und die untere Lage der Sperrfolie 4 berühren. Der Überstand u₁ beträgt hier beispielsweise 5,5 mm. An allen anderen Seitenkanten 5.2, 5.3, 5.4 des Funktionselements 5 weist die Sperrfolie 4 einen Überstand u von beispielsweise 10 mm auf.

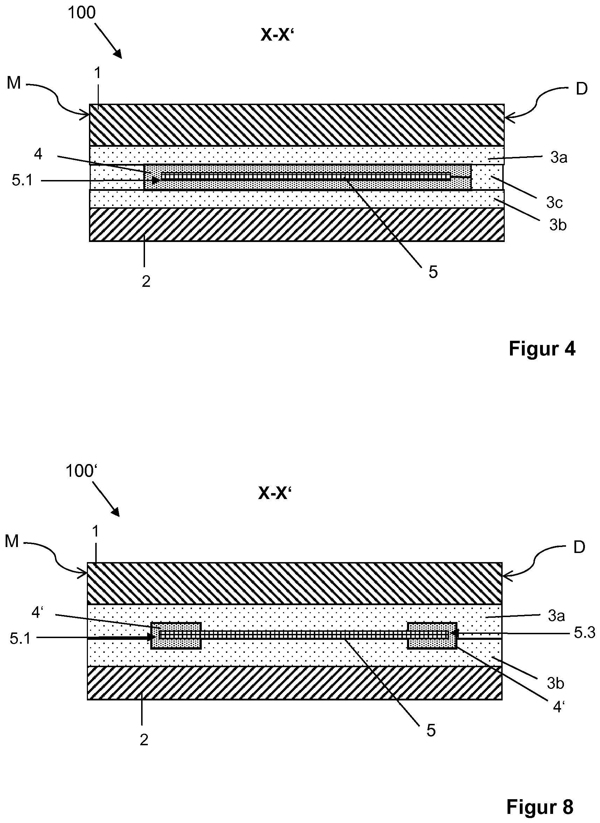

Figur 4 zeigt eine Weiterbildung der erfindungsgemäßen Verbundscheibe 100 aus Figur 3A-C. Die Verbundscheibe 100 aus Figur 4 entspricht im Wesentlichen, der Verbundscheibe 100 aus den Figuren 3A-C, so dass im Folgenden nur auf die Unterschiede eingegangen wird.

Analog zur Figur 2 ist in dieser Ausgestaltung abschnittsweise zwischen erster Zwischenschicht 3a und zweiter Zwischenschicht 3b eine weitere, dritte Zwischenschicht 3c angeordnet. Die dritte Zwischenschicht 3c besteht beispielsweise aus dem gleichen Material wie die erste und die zweite Zwischenschicht 3a,3b. Die dritte Zwischenschicht weist einen Ausschnitt auf, in welchen das Funktionselement 5 mit der umgefalteten Sperrfolie 4 passgenau, das heißt an allen Seiten bündig, eingelegt ist. Die dritte Zwischenschicht 3c bildet also eine Art Passepartout für das Funktionselement 5. Durch die dritte Zwischenschicht 3c können die Dickenunterschiede, die durch die Materialdicken von Funktionselement 5 und der Sperrfolie 4 bedingt sind, ausgeglichen werden.

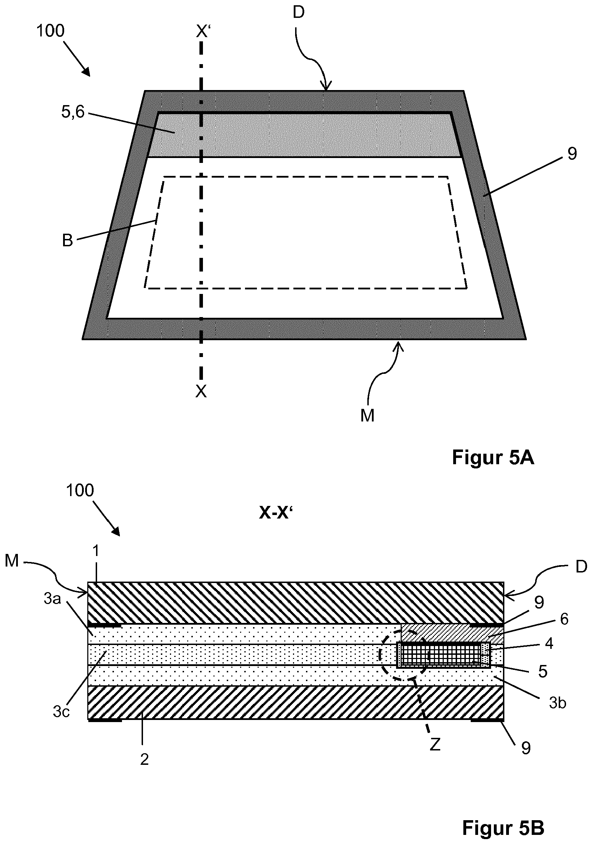

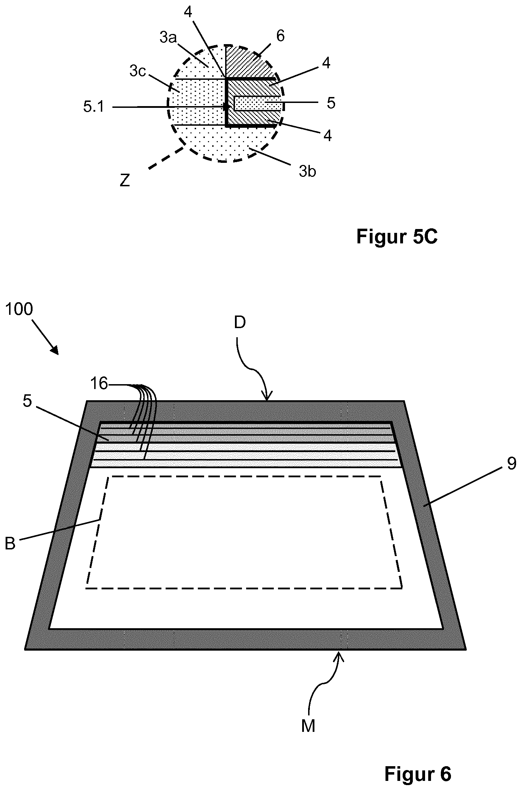

Figur 5A, Figur 5B und Figur 5C zeigen je ein Detail einer alternativen erfindungsgemäßen Verbundscheibe 100 als Windschutzscheibe mit elektrisch steuerbarer Sonnenblende. Die Verbundscheibe 100 aus Figur 5A-C entspricht im Wesentlichen, der Verbundscheibe 100 aus den Figuren 1A-C, so dass im Folgenden nur auf die Unterschiede eingegangen wird.

Die Windschutzscheibe umfasst eine trapezförmige Verbundscheibe 100 mit einer Außenscheibe 1 und einer Innenscheibe 2, die über zwei Zwischenschichten 3a,3b miteinander verbunden sind. Die Außenscheibe 1 weist eine Dicke von 2,1 mm auf und besteht aus einem grün eingefärbten Kalk-Natron-Glas. Die Innenscheibe 2 weist eine Dicke von 1,6 mm auf und besteht aus einem klaren Kalk-Natron-Glas. Die Windschutzscheibe weist eine in Einbaulage dem Dach zugewandte Oberkante D und eine in Einbaulage dem Motorraum zugewandte Unterkanten M auf.

Die Windschutzscheibe ist mit einem elektrisch regelbaren Funktionselement 5 als Sonnenblende ausgestattet, das in einem Bereich oberhalb des zentralen Sichtbereichs B (wie in ECE-R43 definiert) angeordnet ist. Die Sonnenblende ist durch eine kommerzielle erhältliche PDLC-Mehrschichtfolie als Funktionselement 5 gebildet, die in die Zwischenschichten 3a,3b eingelagert ist. Die Höhe der Sonnenblende beträgt beispielsweise 21 cm. Die erste Zwischenschicht 3a ist mit der Außenscheibe 1 verbunden, die zweite Zwischenschicht 3b ist mit der Innenscheibe 2 verbunden. Eine dazwischenliegende dritte Zwischenschicht 3c weist einen Ausschnitt auf, in welchen die zugeschnittene PDLC-Mehrschichtfolie passgenau, das heißt an allen Seiten bündig, eingelegt ist. Die dritte Zwischenschicht 3c Schicht bildet also gleichsam eine Art Passepartout für das Funktionselement 5, welches somit rundum in thermoplastisches Material eingekapselt und dadurch geschützt ist.

Die erste Zwischenschicht 3a weist einen getönten Bereich 6 auf, der zwischen dem Funktionselement 5 und der Außenscheibe 1 angeordnet ist. Die Lichttransmission der Windschutzscheibe wird dadurch im Bereich des Funktionselements 5 zusätzlich herabgesetzt und das milchige Aussehen des PDLC-Funktionselements 5 im diffusiven Zustand abgemildert. Die Ästhetik der Windschutzscheibe wird dadurch deutlich ansprechender gestaltet. Die erste Zwischenschicht 3a weist im Bereich 6 beispielsweise eine durchschnittliche Lichttransmission von 30% auf, womit gute Ergebnisse erzielt werden.

Der Bereich 6 kann homogen getönt sein. Oft ist es jedoch optisch ansprechender, wenn die Tönung in Richtung der Unterkante des Funktionselements 5 geringer wird, so dass der getönte und der ungetönte Bereich fließend ineinander übergehen.

Im dargestellten Fall sind die Unterkanten des getönten Bereichs 6 und die Unterkante des PDLC-Funktionselements 5 (hier deren Seitenkante 5.1) mit der Sperrfolie 4 bündig angeordnet. Dies ist aber nicht notwendigerweise der Fall. Es ist ebenso möglich, dass der getönte Bereich 6 über das Funktionselement 5 übersteht oder dass umgekehrt das Funktionselement 5 über den getönten Bereich 6 übersteht. Im letztgenannten Fall wäre nicht das gesamte Funktionselement 5 über den getönten Bereich 6 mit der Außenscheibe 1 verbunden.

Das regelbare Funktionselement 5 ist eine Mehrschichtfolie, bestehend aus einer aktiven Schicht 11 zwischen zwei Flächenelektroden 12, 13 und zwei Trägerfolien 14, 15. Die aktive Schicht 11 enthält eine Polymermatrix mit darin dispergierten Flüssigkristallen, die sich in Abhängigkeit der an die Flächenelektroden angelegten elektrischen Spannung ausrichten, wodurch die optischen Eigenschaften geregelt werden können. Die Trägerfolien 14, 15 bestehen aus PET und weisen eine Dicke von beispielsweise 0,125 mm auf. Die Trägerfolien 14, 15 sind mit einer zur aktiven Schicht 11 weisenden Beschichtung aus ITO mit einer Dicke von etwa 100 nm versehen, welche die Elektroden 12, 13 ausbilden. Die Elektroden 12, 13 sind über nicht dargestellte Sammelleiter (beispielweise ausgebildet durch einen silberhaltigen Siebdruck) und nicht dargestellte Verbindungskabel mit der Bordelektrik verbindbar.

Die Windschutzscheibe weist, wie üblich, einen umlaufenden peripheren Abdeckdruck 9 auf, der durch ein opakes Emaille auf den innenraumseitigen Oberflächen (in Einbaulage dem Innenraum des Fahrzeugs zugewandt) der Außenscheibe 1 und der Innenscheibe 2 ausgebildet ist. Der Abstand des Funktionselements 5 zur Oberkante D und den Seitenkanten der Windschutzscheibe ist kleiner als die Breite des Abdeckdrucks 9, so dass die Seitenkanten des Funktionselements 5 - mit Ausnahme der zum zentralen Sichtfeld B weisenden Seitenkante - durch den Abdeckdruck 9 verdeckt sind. Auch die nicht dargestellten elektrischen Anschlüsse werden sinnvollerweise im Bereich des Abdeckdrucks 9 angebracht und somit versteckt.

Analog zur Figur 3A-C ist die Sperrfolie 4 einstückig ausgebildet und um eine der Kanten des Funktionselements 5 (hier der Seitenkante 5.1, die zur Kante M der Verbundscheibe 100 unmittelbar benachbarten Kante des Funktionselements 5) gefaltet. Gefaltet bedeutet hier, dass die Sperrfolie 4 um 180° gedreht und parallel zu sich selbst angeordnet wird. In dem so gebildeten Zwischenraum ist das Funktionselement 5 angeordnet. An allen anderen Seitenkanten 5.2, 5.3, 5.4 des Funktionselements 5 weist die Sperrfolie 4 einen Überstand u von beispielsweise 10 mm auf. Alternative Windschutzscheiben weisen lediglich einen kleinen Überstand im Bereich der Umfaltung der Sperrfolie 4 am Funktionselement 5 auf und sind an den anderen Seitenkanten 5.2, 5.3, 5.4 bündig mit dem Funktionselement 5 angeordnet. Die dort stattfindende Aufhellung und Änderung der optischen Eigenschaften bei Alterung kann beispielsweise durch einen Abdeckdruck verdeckt werden. Die einzige optisch sichtbare untere Seitenkante 5.1 des Funktionselements 5, an der die Sperrfolie 4 umgefaltet ist, ist aber besonders vor Alterung geschützt.

Für die Zwischenschichten 3a, 3b, 3c kann bevorzugt ein sogenanntes "High Flow PVB" verwendet werden, welches im Vergleich zu Standard-PVB-Folien ein stärkeres Fließverhalten aufweist. So zerfließen die Schichten stärker um die Sperrfolie 4 und das Funktionselement 5 herum, wodurch ein homogenerer optischer Eindruck entsteht und der Übergang von Funktionselement 5 zur Zwischenschicht 3c weniger stark auffällt. Das "High Flow PVB" kann für alle oder auch nur für eine oder mehrere der Zwischenschichten 3a, 3b, 3c verwendet werden.

Figur 6 zeigt eine Draufsicht auf eine weitere Ausgestaltung einer erfindungsgemäßen Verbundscheibe 100 als Windschutzscheibe mit elektrisch steuerbarer Sonnenblende. Die Windschutzscheibe und das Funktionselement 5 als steuerbare Sonnenblende entsprechen im Wesentlichen der Ausführung aus Figur 5. Das PDLC-Funktionselement 5 ist allerdings durch horizontale Isolierungslinien 16 in sechs streifenartige Segmente aufgeteilt. Die Isolierungslinien 16 weisen beispielsweise eine Breite von 40 µm bis 50 µm und einen gegenseitigen Abstand von 3,5 cm auf. Sie sind mittels eines Lasers in die vorgefertigte Mehrschichtfolie eingebracht worden. Die Isolierungslinien 16 trennen insbesondere die Elektroden 12, 13 in voneinander isolierte Streifen, die jeweils über einen separaten elektrischen Anschluss verfügen. So sind die Segmente unabhängig voneinander schaltbar. Je dünner die Isolierungslinien 16 ausgeführt sind, desto unauffälliger sind sie. Mittels Ätzverfahren können noch dünnere Isolierungslinien 16 realisiert werden.

Durch die Segmentierung lässt sich die Höhe des abgedunkelten Funktionselements 5 einstellen. So kann der Fahrer abhängig vom Sonnenstand die gesamte Sonnenblende oder auch nur einen Teil davon abdunkeln. In der Figur ist angedeutet, dass die obere Hälfte der Sonnenblende abgedunkelt ist und die untere Hälfte transparent ist.

In einer besonders komfortablen Ausgestaltung wird das Funktionselement 5 durch eine im Bereich des Funktionselements angeordnete kapazitive Schaltfläche gesteuert, wobei der Fahrer durch den Ort, an dem er die Scheibe berührt, den Abdunklungsgrad festlegt. Alternativ kann das Funktionselement 5 auch durch kontaktfreie Verfahren, beispielsweise durch das Erkennen von Gesten, oder in Abhängigkeit des durch eine Kamera und geeignete Auswerteelektronik festgestellten Zustands von Pupille oder Augenlid gesteuert werden.

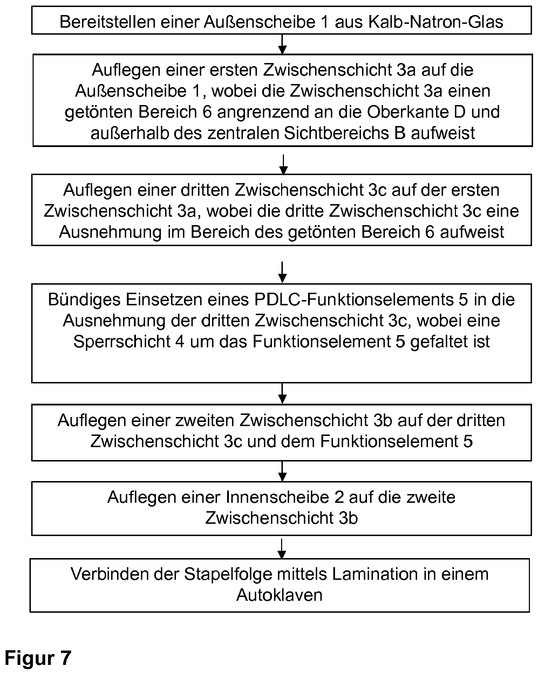

Figur 7 zeigt ein Ausführungsbeispiel des erfindungsgemäßen Herstellungsverfahrens anhand eines Flussdiagramms.

Figur 8 zeigt eine Verbundscheibe 100' nach dem Stand der Technik, wie sie in Figur 4 der WO 2014/086554 A1 und der dazugehörigen Beschreibung offenbart ist. Als Sperrfolie 4' (Randversiegelung genannt) ist eine Polyimid-Folie offenbart, die umlaufend um die Seitenkanten 5.1, 5.2, 5.3, 5.4 des Funktionselements 5 verläuft. Die Polyimid-Folie erstreckt sich ausgehend von den Seitenkanten des Funktionselements einige Millimeter über die von der aktiven Schicht abgewandten Oberfläche der Trägerfolien.

Im Stand der Technik überlappt die Polyimid-Folie das Funktionselement 5. Allerdings gibt es keinen Bereich, in dem die Polyimid-Folie einen Überstand u über das Funktionselement 5 aufweist und überstehende Abschnitte der Polyimid-Folie unmittelbar benachbart angeordnet sind und sich berühren.

Im Bereich, in dem bei einer erfindungsgemäßen Verbundscheibe ein Überstand vorliegt, das heißt bei dem die erfindungsgemäßen Sperrfolien 4a, 4b beziehungsweise zwei Enden einer um eine gegenüberliegende Seitenkante gefaltete erfindungsgemäße Sperrfolie 4 sich berühren, ist im Stand der Technik nach Figur 8 lediglich die Polyimid-Folie um die Seitenkante enganliegend geführt. Das heißt, es liegt im Stand der Technik kein erfindungsgemäßer Überstand vor.

Da die Polyimid-Folie nach dem Stand der Technik umlaufend um den gesamten Seitenkantenbereich 5.1, 5.2, 5.3, 5.4 gefaltet ist, ergeben sich zwangsläufig Hohlräume, Kanäle oder Knicke in der Polyimid-Folie, insbesondere an den Ecken des Funktionselements 5. Dort weist die Anordnung nur verschlechterte Diffussionssperreigenschaften auf. Dies führt bei der Anordnung nach dem Stand der Technik zu unerwünschten Alterungserscheinungen und Verschlechterungen der optischen Eigenschaften des Funktionselements, insbesondere im Bereich der Ecken des Funktionselements.

Bei erfindungsgemäßen Sperrfolien 4, 4a, 4b berühren sich die Sperrfolien 4, 4a, 4b flächig und insbesondere vollflächig im Bereich des Überstands u, das heißt in dem Bereich, in dem sie seitlich über das Funktionselement 5 hinausragen. Die erfindungsgemäßen Sperrfolienabschnitte sind dort durch den inneren Druck in der fertiglaminierten Verbundscheibe 100 fest aufeinandergepresst und fixiert, wodurch eine hermetische Abdichtung stattfindet.

Dies war für den Fachmann unerwartet und überraschend.

### Bezugszeichenliste:

- 1: Außenscheibe
- 2: Innenscheibe
- 3a: erste Zwischenschicht
- 3b: zweite Zwischenschicht
- 4, 4a, 4b: Sperrfolie
- 4': Sperrfolie nach dem Stand der Technik
- 5: Funktionselement mit elektrisch steuerbaren optischen Eigenschaften
- 5.1,5.2,5.3,5.4: Seitenkante des Funktionselements 5
- 6: getönter Bereich der ersten Zwischenschicht 3a
- 7: Verbindungsstellen
- 9: Abdeckdruck
- 11: aktive Schicht des Funktionselements 5
- 12: Flächenelektrode des Funktionselements 5
- 13: Flächenelektrode des Funktionselements 5
- 14: Trägerfolie
- 15: Trägerfolie
- 16: Isolierungslinien
- 100: Verbundscheibe
- 100': Verbundscheibe nach dem Stand der Technik

- B: zentrales Sichtfeld der Windschutzscheibe
- D: Oberkante der Windschutzscheibe, Dachkante
- M: Unterkante der Windschutzscheibe, Motorkante
- u, u₁: Überstand
- X-X': Schnittlinie
- Z: vergrößerter Bereich

## Patentansprüche

1. Verbundscheibe (100) mit Funktionselement (5) mit elektrisch steuerbaren optischen Eigenschaften, umfassend:
• eine Stapelfolge aus einer Außenscheibe (1), einer ersten Zwischenschicht (3a), einer zweiten Zwischenschicht (3b) und einer Innenscheibe (2), wobei die Zwischenschichten (3a, 3b) mindestens eine thermoplastische polymere Folie mit mindestens einem Weichmacher enthalten, und
• zwischen der ersten Zwischenschicht (3a) und der zweiten Zwischenschicht (3b) zumindest abschnittsweise ein Funktionselement (5) mit elektrisch steuerbaren optischen Eigenschaften angeordnet ist,
wobei zwischen der ersten Zwischenschicht (3a) und dem Funktionselement (5) sowie zwischen dem Funktionselement (5) und der zweiten Zwischenschicht (3b) mindestens eine Sperrfolie (4, 4a, 4b) zumindest abschnittsweise angeordnet ist, die zumindest abschnittsweise einen Überstand u über das Funktionselement (5) aufweist, **dadurch gekennzeichnet, dass** überstehende Abschnitte der Sperrfolie (4, 4a, 4b) unmittelbar benachbart angeordnet sind, sich flächig berühren und aneinander gepresst, verklebt oder verschweißt sind.

2. Verbundscheibe (100) nach Anspruch 1, wobei zwischen der ersten Zwischenschicht (3a) und dem Funktionselement (5) und zwischen der zweiten Zwischenschicht (3b) und dem Funktionselement (5) jeweils mindestens eine Sperrfolie (4a, 4b) angeordnet ist, die einen allseitigen Überstand u über das Funktionselement (5) aufweist und das Funktionselement (5) zumindest abschnittsweise und bevorzugt vollständig bedeckt.

3. Verbundscheibe (100) nach Anspruch 1, wobei zwischen der ersten Zwischenschicht (3a) und dem Funktionselement (5) und zwischen der zweiten Zwischenschicht (3b) und dem Funktionselement (5) mindestens eine Sperrfolie (4) angeordnet ist, die zumindest abschnittsweise um eine Seitenkante (5.1) des Funktionselements (5) gefaltet ist und bevorzugt an den anderen Seitenkanten (5.2,5.3,5.4) einen Überstand u über das Funktionselement (5) aufweist.

4. Verbundscheibe (100) nach Anspruch 3, wobei um jede Seitenkante (5.1, 5.2, 5.3, 5.4) mindestens eine Sperrfolie (4) gefaltet ist und die Sperrfolien (4) das Funktionselement (5) zumindest abschnittsweise und bevorzugt vollständig bedecken.

5. Verbundscheibe (100) nach einem der Ansprüche 1 bis 4, wobei die Zwischenschicht (3a,3b) mindestens 3 Gew.-%, bevorzugt mindestens 5 Gew.-%, besonders bevorzugt mindestens 20 Gew.-%, noch mehr bevorzugt mindestens 30 Gew.-% und insbesondere mindestens 40 Gew.-% eines Weichmachers enthält und der Weichmacher bevorzugt aliphatische Diester des Tri- bzw. Tetraethylenglykols, besonders bevorzugt Triethylenglykol-bis-(2-ethylhexanoat), enthält oder daraus besteht.

6. Verbundscheibe (100) nach einem der Ansprüche 1 bis 5, wobei die Zwischenschicht (3a,3b) mindestens 60 Gew.-%, bevorzugt mindestens 70 Gew.-%, besonders bevorzugt mindestens 90 Gew.-% und insbesondere mindestens 97 Gew.-% Polyvinylbutyral (PVB) enthält.

7. Verbundscheibe (100) nach einem der Ansprüche 1 bis 6, wobei das Funktionselement (5) eine Polymer dispersed liquid crystal (PDLC)-Folie ist.

8. Verbundscheibe (100) nach einem der Ansprüche 1 bis 7, wobei die Sperrfolie (4) derart ausgebildet ist, dass sie die Diffusion von Weichmacher durch die Sperrfolie (4) verhindert.

9. Verbundscheibe (100) nach einem der Ansprüche 1 bis 8, wobei die Sperrfolie (4, 4a, 4b) Weichmacher-arm oder Weichmacher-frei ist und bevorzugt Polyethylenterephthalat (PET) oder Polyvinylfluorid (PVF) enthält oder daraus besteht.

10. Verbundscheibe (100) nach einem der Ansprüche 1 bis 9, wobei der Überstand u der Sperrfolie (4, 4a, 4b) über das Funktionselement (5) mindestens 0,5 mm, bevorzugt mindestens 2 mm, besonders bevorzugt mindestens 5 mm und insbesondere mindestens 10 mm beträgt.

11. Verbundscheibe (100) nach einem der Ansprüche 1 bis 10, wobei der Überstand u der Sperrfolie (4, 4a, 4b) über das Funktionselement (5) weniger als 50 mm, bevorzugt weniger als 30 mm und besonders bevorzugt weniger als 20 mm beträgt.

12. Verbundscheibe (100) nach einem der Ansprüche 1 bis 11, wobei die Sperrfolien (4, 4a, 4b) im Bereich des Überstands u zumindest abschnittsweise miteinander verbunden sind, bevorzugt miteinander verklebt oder miteinander verschweißt sind.

13. Verbundscheibe (100) nach einem der Ansprüche 1 bis 12, wobei die Sperrfolien (4, 4a, 4b) mit dem Funktionselement (5) und im Bereich des Überstands u vollflächig miteinander verbunden sind, bevorzugt verklebt sind.

14. Verbundscheibe (100) nach einem der Ansprüche 1 bis 13, wobei das Funktionselement (5) und die Sperrfolie (4, 4a, 4b) umlaufend von einer dritten Zwischenschicht (3c) umgeben sind.

15. Verfahren zur Herstellung einer Verbundscheibe nach einem der Ansprüche 1 bis 14, wobei zumindest
a) eine Außenscheibe (1), eine erste Zwischenschicht (3a), ein Funktionselement (5) mit elektrisch steuerbaren optischen Eigenschaften, eine zweite Zwischenschicht (3b) und eine Innenscheibe (2) in dieser Reihenfolge übereinander angeordnet werden, wobei zwischen Funktionselement und Zwischenschicht eine Sperrfolie angeordnet wird, und
b) die Außenscheibe (1) und die Innenscheibe (2) durch Lamination verbunden werden, wobei aus der ersten Zwischenschicht (3a) und der zweiten Zwischenschicht (3b) eine Zwischenschicht mit eingelagertem Funktionselement (5) gebildet wird.

16. Verfahren nach Anspruch 15, wobei vor dem Verfahrensschritt a) eine erste Sperrfolie (4a) und die erste Zwischenschicht (3a) und/oder eine zweite Sperrfolie (4b) und die zweite Zwischenschicht (3b) miteinander verklebt werden

17. Verfahren nach Anspruch 15 oder Anspruch 16, wobei im Verfahrensschritt a) zwischen der ersten Zwischenschicht (3a) und der zweiten Zwischenschicht (3b) eine dritte Zwischenschicht (3c) angeordnet wird, die das Funktionselement (5) umrandet.

18. Verwendung einer Verbundscheibe (100) nach einem der Ansprüche 1 bis 14 als Windschutzscheibe oder Dachscheibe eines Fahrzeugs und das elektrisch steuerbare Funktionselement (5) als Sonnenblende.

19. Verwendung einer Verbundscheibe (100) mit elektrisch steuerbarem Funktionselement (5) nach einem der Ansprüche 1 bis 14 als Innenverglasung oder Außenverglasung in einem Fahrzeug oder einem Gebäude und das elektrisch steuerbare Funktionselement (5) als Sonnenschutz oder als Sichtschutz.

## Claims

1. Composite pane (100) comprising a functional element (5) having electrically controllable optical properties, comprising:
• a stack sequence formed of an outer pane (1), a first intermediate layer (3a), a second intermediate layer (3b), and an inner pane (2), wherein the intermediate layers (3a, 3b) contain at least one thermoplastic polymer film with at least one plasticizer, and
• a functional element (5) having electrically controllable optical properties is arranged between the first intermediate layer (3a) and the second intermediate layer (3b) at least in sections,
wherein between the first intermediate layer (3a) and the functional element (5) as well as between the functional element (5) and the second intermediate layer (3b), at least one barrier film (4, 4a, 4b) is arranged at least in sections, which has, at least in sections, an overhang u beyond the functional element (5),
**characterized in that**
overhanging sections of the barrier film (4, 4a, 4b) are arranged immediately adjacent one another and contact one another areally, and are pressed, glued, or welded to one another.

2. Composite pane (100) according to claim 1, wherein at least one barrier film (4a, 4b) is in each case arranged between the first intermediate layer (3a) and the functional element (5) and between the second intermediate layer (3b) and the functional element (5), which barrier film has an all-around overhang u beyond the functional element (5) and covers the functional element (5) at least in sections and preferably completely.

3. Composite pane (100) according to claim 1, wherein at least one barrier film (4) is arranged between the first intermediate layer (3a) and the functional element (5) and between the second intermediate layer (3b) and the functional element (5), which barrier film is folded at least in sections around a side edge (5.1) of the functional element (5) and preferably has an overhang u beyond the functional element (5) on the other side edges (5.2,5.3,5.4).

4. Composite pane (100) according to claim 3, wherein at least one barrier film (4) is folded around each side edge (5.1, 5.2, 5.3, 5.4) and the barrier films (4) cover the functional element (5) at least in sections and preferably completely.

5. Composite pane (100) according to one of claims 1 through 4, wherein the intermediate layer (3a,3b) contains at least 3 wt.-%, preferably at least 5 wt.-%, particularly preferably at least 20 wt.-%, even more preferably at least 30 wt.-%, and in particular at least 40 wt.-% of a plasticizer and the plasticizer preferably contains or consists of aliphatic diesters of tri- or tetraethylene glycol, particularly preferably triethylene glycol bis(2-ethylhexanoate).

6. Composite pane (100) according to one of claims 1 through 5, wherein the intermediate layer (3a,3b) contains at least 60 wt.-%, preferably at least 70 wt.-%, particularly preferably at least 90 wt.-%, and in particular at least 97 wt.-% polyvinyl butyral (PVB).

7. Composite pane (100) according to one of claims 1 through 6, wherein the functional element (5) is a polymer-dispersed liquid crystal (PDLC) film.

8. Composite pane (100) according to one of claims 1 through 7, wherein the barrier film (4) is implemented such that it prevents the diffusion of plasticizer through the barrier film (4).

9. Composite pane (100) according to one of claims 1 through 8, wherein the barrier film (4, 4a, 4b) is low in plasticizer or free of plasticizer and preferably contains or consists of polyethylene terephthalate (PET) or polyvinyl fluoride (PVF).

10. Composite pane (100) according to one of claims 1 through 9, wherein the overhang u of the barrier film (4, 4a, 4b) beyond the functional element (5) is at least 0.5 mm, preferably at least 2 mm, particularly preferably at least 5 mm, and in particular at least 10 mm.

11. Composite pane (100) according to one of claims 1 through 10, wherein the overhang u of the barrier film (4, 4a, 4b) beyond the functional element (5) is less than 50 mm, preferably less than 30 mm, and particularly preferably less than 20 mm.

12. Composite pane (100) according to one of claims 1 through 11, wherein the barrier films (4, 4a, 4b) are joined to one another at least in sections in the region of the overhang u, preferably glued to one another or welded to one another.

13. Composite pane (100) according to one of claims 1 through 12, wherein the barrier films (4, 4a, 4b) are joined, preferably glued, to the functional element (5) and are joined to one another, preferably glued, over their entire surface in the region of the overhang u.

14. Composite pane (100) according to one of claims 1 through 13, wherein the functional element (5) and the barrier film (4, 4a, 4b) are circumferentially surrounded by a third intermediate layer (3c).

15. Method for producing a composite pane according to one of claims 1 through 14, wherein at least
a) an outer pane (1), a first intermediate layer (3a), a functional element (5) having electrically controllable optical properties, a second intermediate layer (3b), and an inner pane (2) are arranged one atop another in this order, wherein a barrier film is arranged between the functional element and the intermediate layer, and
b) the outer pane (1) and the inner pane (2) are joined by lamination, wherein an intermediate layer with an embedded functional element (5) is formed from the first intermediate layer (3a) and the second intermediate layer (3b).

16. Method according to claim 15, wherein before step a), a first barrier film (4a) and the first intermediate layer (3a) and/or a second barrier film (4b) and the second intermediate layer (3b) are glued to one another.

17. Method according to claim 15 or claim 16, wherein in step a), a third intermediate layer (3c) that surrounds the functional element (5) is arranged between the first intermediate layer (3a) and the second intermediate layer (3b).

18. Use of a composite pane (100) according to one of claims 1 through 14 as a windshield or roof panel of a vehicle and the electrically controllable functional element (5) as a sun visor.

19. Use of a composite pane (100) having an electrically controllable functional element (5) according to one of claims 1 through 14 as interior glazing or exterior glazing in a vehicle or a building and the electrically controllable functional element (5) as a sun screen or as a privacy screen.

## Revendications

1. Vitre composite (100) avec élément fonctionnel (5) ayant des propriétés optiques à commande électrique, comportant :
• une succession en empilement d'une vitre extérieure (1), d'une première couche intermédiaire (3a), d'une deuxième couche intermédiaire (3b) et d'une vitre intérieure (2), les couches intermédiaires (3a, 3b) contenant au moins un film polymère thermoplastique avec au moins un plastifiant ; et
• entre la première couche intermédiaire (3a) et la deuxième couche intermédiaire (3b), au moins par endroits est disposé un élément fonctionnel (5) ayant des propriétés optiques à commande électrique
dans laquelle, entre la première couche intermédiaire (3a) et l'élément fonctionnel (5) ainsi qu'entre l'élément fonctionnel (5) et la deuxième couche intermédiaire (3b), au moins un film barrière (4, 4a, 4b) est disposé au moins par endroits, lequel présente au moins par endroits un dépassement u au-delà de l'élément fonctionnel (5), **caractérisée par le fait que**
des parties en dépassement du film barrière (4, 4a, 4b) sont disposées directement adjacentes, sont en contact de manière plane et sont pressées, collées ou soudées entre elles.

2. Vitre composite (100) selon la revendication 1, dans laquelle, entre la première couche intermédiaire (3a) et l'élément fonctionnel (5) et entre la deuxième couche intermédiaire (3b) et l'élément fonctionnel (5), à chaque fois au moins un film barrière (4a, 4b) est disposé, qui présente un dépassement u sur tous les côtés au-delà de l'élément fonctionnel (5) et recouvre l'élément fonctionnel (5) au moins par endroits et, de préférence, entièrement.

3. Vitre composite (100) selon la revendication 1, dans laquelle, entre la première couche intermédiaire (3a) et l'élément fonctionnel (5) et entre la deuxième couche intermédiaire (3b) et l'élément fonctionnel (5), au moins un film barrière (4) est disposé, qui est replié au moins par endroits autour d'un bord latéral (5.1) de l'élément fonctionnel (5) et de préférence présente un dépassement u au-delà de l'élément fonctionnel (5) sur les autres bords latéraux (5.2, 5.3, 5.4).

4. Vitre composite (100) selon la revendication 3, dans laquelle, autour de chaque bord latéral (5.1, 5.2, 5.3, 5.4), au moins un film barrière (4) est replié et les films barrières (4) recouvrent l'élément fonctionnel (5) au moins par endroits et, de préférence, entièrement.

5. Vitre composite (100) selon l'une des revendications 1 à 4, dans laquelle la couche intermédiaire (3a, 3b) contient au moins 3 % en poids, de préférence au moins 5 % en poids, de façon particulièrement préférée au moins 20 % en poids, de façon encore plus préférée au moins 30 % en poids et en particulier au moins 40 % en poids d'un plastifiant, et le plastifiant contient de préférence des diesters aliphatiques du tri- ou tétraéthylène glycol, de façon particulièrement préférée du bis-(2-éthylhexanoate) de triéthylène glycol ou en est constitué.

6. Vitre composite (100) selon l'une des revendications 1 à 5, dans laquelle la couche intermédiaire (3a, 3b) contient au moins 60 % en poids, de préférence au moins 70 % en poids, de façon particulièrement préférée au moins 90 % en poids et en particulier au moins 97 % en poids de polyvinylbutyral (PVB).

7. Vitre composite (100) selon l'une des revendications 1 à 6, dans laquelle l'élément fonctionnel (5) est un film de cristaux liquides dispersés dans un polymère (PDLC).

8. Vitre composite (100) selon l'une des revendications 1 à 7, dans laquelle le film barrière (4) est conçu de telle sorte qu'il empêche la diffusion de plastifiant à travers le film barrière (4).

9. Vitre composite (100) selon l'une des revendications 1 à 8, dans laquelle le film barrière (4, 4a, 4b) est pauvre en plastifiant ou exempt de plastifiant et contient de préférence du poly(téréphtalate d'éthylène) (PET) ou du poly(fluorure de vinyle) (PVF) ou en est constitué.

10. Vitre composite (100) selon l'une des revendications 1 à 9, dans laquelle le dépassement u du film barrière (4, 4a, 4b) au-delà de l'élément fonctionnel (5) est d'au moins 0,5 mm, de préférence d'au moins 2 mm, de façon particulièrement préférée d'au moins 5 mm et en particulier d'au moins 10 mm.

11. Vitre composite (100) selon l'une des revendications 1 à 10, dans laquelle le dépassement u du film barrière (4, 4a, 4b) au-delà de l'élément fonctionnel (5) est inférieur à 50 mm, de préférence inférieur à 30 mm et de façon particulièrement préférée inférieur à 20 mm.

12. Vitre composite (100) selon l'une des revendications 1 à 11, dans laquelle les films barrières (4, 4a, 4b) sont dans la région du dépassement u au moins par endroits liés entre eux, de préférence collés entre eux ou soudés entre eux.

13. Vitre composite (100) selon l'une des revendications 1 à 12, dans laquelle les films barrières (4, 4a, 4b) sont liés, de préférence sont collés entre eux, sur toute la surface, avec l'élément fonctionnel (5) et dans la région du dépassement u.

14. Vitre composite (100) selon l'une des revendications 1 à 13, dans laquelle l'élément fonctionnel (5) et le film barrière (4, 4a, 4b) sont entourés de manière périphérique d'une troisième couche intermédiaire (3c) .

15. Procédé de fabrication d'une vitre composite selon l'une des revendications 1 à 14, dans lequel au moins
a) une vitre extérieure (1), une première couche intermédiaire (3a), un élément fonctionnel (5) ayant des propriétés optiques à commande électrique, une deuxième couche intermédiaire (3b) et une vitre intérieure (2) sont disposés les uns au-dessus des autres dans cet ordre, un film barrière étant disposé entre élément fonctionnel et couche intermédiaire ; et
b) la vitre extérieure (1) et la vitre intérieure (2) sont liées par stratification, une couche intermédiaire avec élément fonctionnel incorporé (5) étant formée à partir de la première couche intermédiaire (3a) et de la deuxième couche intermédiaire (3b).

16. Procédé selon la revendication 15, dans lequel, avant l'étape de procédé a), un premier film barrière (4a) et la première couche intermédiaire (3a) et/ou un second film barrière (4b) et la deuxième couche intermédiaire (3b) sont collés entre eux.

17. Procédé selon la revendication 15 ou la revendication 16, dans lequel, dans l'étape de procédé a), entre la première couche intermédiaire (3a) et la deuxième couche intermédiaire (3b), une troisième couche intermédiaire (3c) est disposée, qui borde l'élément fonctionnel (5).

18. Utilisation d'une vitre composite (100) selon l'une des revendications 1 à 14 en tant que pare-brise ou vitre de toit d'un véhicule et l'élément fonctionnel à commande électrique (5) en tant que pare-soleil.

19. Utilisation d'une vitre composite (100) avec élément fonctionnel à commande électrique (5) selon l'une des revendications 1 à 14 en tant que vitrage intérieur ou vitrage extérieur dans un véhicule ou un bâtiment et l'élément fonctionnel à commande électrique (5) en tant que protection solaire ou en tant que protection contre les regards indiscrets.
